(19) Europäisches Patentamt / European Patent Office / Office européen des brevets

(11) **EP 4 365 130 A1**

(12) **EUROPEAN PATENT APPLICATION**
published in accordance with Art. 153(4) EPC

(43) Date of publication:
**08.05.2024  Bulletin 2024/19**

(21) Application number: **22832500.7**

(22) Date of filing: **24.03.2022**

(51) International Patent Classification (IPC):
***C01B 13/11*** *(2006.01)*

(52) Cooperative Patent Classification (CPC):
**C01B 13/11**

(86) International application number:
**PCT/JP2022/013827**

(87) International publication number:
**WO 2023/276337 (05.01.2023 Gazette 2023/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.07.2021  JP 2021110564**
**02.07.2021  JP 2021110565**
**02.07.2021  JP 2021110566**
**02.07.2021  JP 2021110567**
**02.07.2021  JP 2021110568**
**02.07.2021  JP 2021110569**

(71) Applicant: **Niterra Co., Ltd.**
**Nagoya-shi, Aichi 461-0005 (JP)**

(72) Inventors:
• **HATTORI, Yoichi**
**Nagoya-shi, Aichi 461-0005 (JP)**
• **UEYAMA,Takeshi**
**Nagoya-shi, Aichi 461-0005 (JP)**
• **NISHIYAMA, Hiroyuki**
**Nagoya-shi, Aichi 461-0005 (JP)**
• **HASUNUMA, Hideki**
**Nagoya-shi, Aichi 461-0005 (JP)**
• **IMAIZUMI, Junya**
**Nagoya-shi, Aichi 461-0005 (JP)**
• **SEGAWA, Masayuki**
**Nagoya-shi, Aichi 461-0005 (JP)**
• **OHTANI, Takayuki**
**Nagoya-shi, Aichi 461-0005 (JP)**
• **YOKOYAMA,Takahiro**
**Nagoya-shi, Aichi 461-0005 (JP)**

(74) Representative: **Grünecker Patent- und Rechtsanwälte PartG mbB Leopoldstraße 4 80802 München (DE)**

(54) **OZONE GENERATING BODY, OZONE GENERATING UNIT, AND OZONE GENERATOR**

(57)    An ozone generating body (3) includes a first electrode (10), a first dielectric (11) that covers the first electrode (10), a second electrode (30), and a second dielectric (31) that covers the second electrode (30). The second dielectric (31) forms a discharge space (DS) between the second dielectric (31) and the first dielectric (11). The ozone generating body (3) further includes a support portion (50) that supports the first dielectric (11) and the second dielectric (31). Young's modulus of the support portion (50) is less than those of the first dielectric (11) and the second dielectric (31).

**(Cont. next page)**

EP 4 365 130 A1

# FIG. 4

**Description**

Technical Field

The present invention relates to an ozone generating body, an ozone generating unit, and an ozone generator.

Background Art

In PTL 1, a plasma generating electrode is disclosed. The plasma generating electrode includes electrodes facing each other. Each electrode includes a ceramic body that is a dielectric and a conductive film disposed in the ceramic body. The electrodes facing each other are supported by a holding member.

Citation List

Patent Literature

PTL 1: WO2005/005798

Summary of Invention

Technical Problem

As for a technique in PTL 1, when the dielectric vibrates, a stress is applied to a portion thereof that is supported by the holding member, which may damage the dielectric.
The present invention provides a technique that enables a dielectric to be less likely to be damaged.

Solution to Problem

[1] An ozone generating body according to the present invention includes a first electrode, a first dielectric that covers the first electrode, a second electrode, and a second dielectric that covers the second electrode. The ozone generating body further includes a support portion that supports the first dielectric and the second dielectric. A discharge space is formed between the first dielectric and the second dielectric. Young's modulus of the support portion is less than those of the first dielectric and the second dielectric.

With this structure, a stress is less likely to be applied to a portion supported by the support portion even when the first dielectric or the second dielectric vibrates. Therefore, the first dielectric and the second dielectric are less likely to be damaged.
[2] The support portion may support the first dielectric and the second dielectric at one end side in a perpendicular direction that is perpendicular to a direction in which the first dielectric and the second dielectric are arranged.
With this structure, since the first dielectric and the second dielectric are supported at the ends on the same side, a portion between the first dielectric and the second dielectric at the other end side in the perpendicular direction can be opened. Accordingly, gas easily enters the discharge space formed between the first dielectric and the second dielectric. Consequently, the efficiency of generation of ozone can be improved.
[3] The support portion may include a spacer that is disposed between the first dielectric and the second dielectric.
With this structure, a distance between the first dielectric and the second dielectric can be easily set by the spacer.
[4] The ozone generating body may include a first terminal that is electrically connected to the first electrode, and a second terminal that is electrically connected to the second electrode. The first terminal may include a first connection portion that is electrically connected to the first electrode and a first projecting portion that is continuous with the first connection portion and that projects further toward the one end side than an end portion of the first dielectric. The second terminal may include a second connection portion that is electrically connected to the second electrode and a second projecting portion that is continuous with the second connection portion and that projects in the same direction as the first projecting portion. The spacer may be an insulating member and may include a spacer portion that is disposed between the first dielectric and the second dielectric and an extension portion that extends from the spacer portion and that is disposed between the first projecting portion and the second projecting portion.
With this structure, the first terminal and the second terminal can be insulated from each other more reliably.
[5] The ozone generating body may include a first terminal that is electrically connected to the first electrode,

and a second terminal that is electrically connected to the second electrode. The first terminal may include a first connection portion that is electrically connected to the first electrode, a first projecting portion that is continuous with the first connection portion and that projects further toward the one end side than an end portion of the first dielectric, and a third connection portion that is bent and extends from an end of the first projecting portion. The second terminal may include a second connection portion that is electrically connected to the second electrode, a second projecting portion that is continuous with the second connection portion and that projects in the same direction as the first projecting portion, and a fourth connection portion that is bent and extends from an end of the second projecting portion.

With this structure, the third connection portion of the first terminal is bent and extends from the end of the first projecting portion, and accordingly, the first terminal can be inhibited from expanding in a projecting direction of the first projecting portion. The fourth connection portion of the second terminal is bent and extends from the end of the second projecting portion, and accordingly, the second terminal can be inhibited from expanding in a projecting direction of the second projecting portion.

[6] The support portion may include a holder that holds the first dielectric and the second dielectric with the spacer interposed therebetween.

With this structure, the distance between the first dielectric and the second dielectric can be kept constant by the spacer and the holder of the support portion.

[7] The ozone generating body may include a first terminal that is electrically connected to the first electrode, and a second terminal that is electrically connected to the second electrode. The first terminal may be disposed on a side of the first dielectric opposite to the spacer side. The second terminal may be disposed on a side of the second dielectric opposite to the spacer side. The holder may include a notch portion that is cut such that the first terminal and the second terminal are exposed.

With this structure, the first terminal and the second terminal are easily filled with resin via the notch portion.

[8] The holder may include a second notch portion that is cut such that the discharge space is exposed.

With this structure, the holder surrounds outer circumferences of the first dielectric and the second dielectric, but gas can be allowed to enter the discharge space via the second notch portion. Therefore, reduction in the amount of the gas entering the discharge space due to the provision of the holder can be reduced.

[9] A dielectric gap that corresponds to a distance between the first dielectric and the second dielectric may be 0.15 mm or more.

With this structure, gas easily enters the discharge space and gas is easily discharged from the discharge space.

[10] An ozone generating unit according to the present invention includes the ozone generating body described in any one of [1] to [9], and a thermosetting resin. The support portion of the ozone generating body supports the first dielectric and the second dielectric at one end side in a perpendicular direction that is perpendicular to a direction in which the first dielectric and the second dielectric are arranged. The ozone generating body includes a first terminal that is electrically connected to the first electrode, and a second terminal that is electrically connected to the second electrode. The first terminal includes a first connection portion that is electrically connected to the first electrode and a first projecting portion that is continuous with the first connection portion and that projects further toward the one end side than an end portion of the first dielectric. The second terminal includes a second connection portion that is electrically connected to the second electrode and a second projecting portion that is continuous with the second connection portion and that projects in the same direction as the first projecting portion. The thermosetting resin is provided between the first projecting portion and the second projecting portion.

With this structure, since the first projecting portion and the second projecting portion project toward the one end side of the first dielectric and the second dielectric, a distance between the first projecting portion and the second projecting portion is short. However, the thermosetting resin is provided between the first projecting portion and the second projecting portion, so that the first projecting portion and the second projecting portion are insulated from each other. Accordingly, insulation between the first projecting portion and the second projecting portion can be ensured by the thermosetting resin.

[11] A first ozone generator according to the present invention includes a flow path for gas, a fan, and the ozone generating body described in any one of [1] to [9]. The fan sends gas from an intake port side to an exhaust port side of the flow path. The ozone generating body generates ozone in the flow path by using air that is sucked from the intake port as a material.

With this structure, the ozone generating body described in any one of [1] to [9] can be used for the ozone generator.

[12] In the ozone generator described above in [11], the support portion of the ozone generating body may support the first dielectric and the second dielectric at one end side in a perpendicular direction that is perpendicular to a direction in which the first dielectric and the second dielectric are arranged, and may be held outside a wall surface of the flow path. The first dielectric and the second dielectric of the ozone generating body may project inward from the wall surface.

With this structure, as compared with a structure in which ends on both sides are supported or a structure in which ends on alternate opposite sides are each supported, a structure for fixing the ozone generating body and a wiring can be concentrated, and accordingly, the structure can be made simple.

[13] The ozone generator may include a flow path component in which the flow path is provided. The ozone generator may include an axial fan that generates swirl flow about a central axis in the flow path and that sends gas from an intake port side to an exhaust port side of the flow path. As for the ozone generating body, one end of the first dielectric and one end of the second dielectric may be supported by the flow path component, an other end of the first dielectric and an other of the second dielectric may be separated from an inner wall surface of the flow path component, and a discharge space may be provided between the first dielectric and the second dielectric. A gas inlet may be constituted by including an end portion of the first dielectric that differs from the one end and the other end and an end portion of the second dielectric that faces the end portion of the first dielectric. A direction in which gas enters from the gas inlet may be inclined in a rotation direction of the axial fan with respect to the central axis.

With this structure, the direction in which gas enters from the gas inlet is inclined in the rotation direction of the axial fan with respect to the central axis, and accordingly, the gas is easily introduced into the discharge space from the gas inlet. Therefore, the efficiency of generation of ozone of the ozone generator is improved.

[14] The support portion may support the first dielectric and the second dielectric at one end side in a perpendicular direction that is perpendicular to a direction in which the first dielectric and the second dielectric are arranged. The first dielectric may have a first surface that faces the second dielectric and that forms the discharge space between the first surface and the second dielectric. The second dielectric may have a second surface that faces the first surface. In the ozone generator, an inclination angle $\theta$ of the first surface with respect to the second surface in a case where a direction in which the first surface is separated from the second surface at an other end side in the perpendicular direction is a positive direction may satisfy an expression (I):

$$-1.8 \ [\%] \leq \tan \theta \times 100 \leq 3.0 \ [\%]. \ \cdots \ \text{Expression (I)}$$

With this structure, since the first dielectric and the second dielectric are supported at the ends on the same side, a portion between the first dielectric and the second dielectric at the other end side in the perpendicular direction can be opened. Accordingly, gas easily enters the discharge space formed between the first dielectric and the second dielectric. Consequently, the efficiency of generation of ozone can be improved. In addition, since the inclination angle $\theta$ is set in the range satisfying the expression (I), it is possible to inhibit gas from being less likely to enter the discharge space and ozone generated in the discharge space from being less likely to be discharged due to a small opening at the other end side of the ozone generating body in the perpendicular direction, and in addition, it is possible to inhibit generation of an electromagnetic noise caused by discharge due to a large opening at the other end side of the ozone generating body in the perpendicular direction.

[15] A second ozone generator according to the present invention includes a flow path for gas, a fan, the ozone generating body, and a diffuser panel. The fan sends gas from an intake port side to an exhaust port side of the flow path. The ozone generating body is provided in the flow path and generates ozone in the flow path. The diffuser panel is disposed downstream of the ozone generating body in the flow path.

With this structure, since the ozone generated by the ozone generating body is diffused by the diffuser panel disposed downstream thereof, ozone concentration near the exhaust port of the flow path can be dispersed. Advantageous Effects of Invention

According to the present invention, a dielectric can be unlikely to be damaged.

Brief Description of Drawings

[Fig. 1] Fig. 1 is a perspective view of an ozone generator according to a first embodiment.
[Fig. 2] Fig. 2 is a perspective view of a section of the ozone generator.
[Fig. 3] Fig. 3 is a sectional view of the ozone generator in a section that differs from that in Fig. 2.
[Fig. 4] Fig. 4 is a perspective view of an ozone generating body.
[Fig. 5] Fig. 5 illustrates the ozone generating body viewed in a transverse direction.
[Fig. 6] Fig. 6 illustrates the ozone generating body viewed in the direction of arrangement.
[Fig. 7] Fig. 7 is an exploded perspective view of the ozone generating body.
[Fig. 8] Fig. 8 is a perspective view of the ozone generating body before a holder is mounted.
[Fig. 9] Fig. 9 is a sectional view taken along line A-A in Fig. 6.
[Fig. 10] Fig. 10 is a perspective view of the ozone generating body that is held by a holding portion where a resin member is omitted.

[Fig. 11] Fig. 11 is a sectional view of the ozone generating body illustrated in Fig. 10 where the ozone generating body is cut along a section that extends in a longitudinal direction.

[Fig. 12] Fig. 12 is a diagram that corresponds to Fig. 11 where the resin member is not omitted.

[Fig. 13] Fig. 13 is a block diagram illustrating the electrical structure of the ozone generator.

[Fig. 14] Fig. 14 illustrates an ozone generating body according to a second embodiment viewed in the transverse direction.

[Fig. 15] Fig. 15 is an enlarged view of an end portion of a first electrode and a second electrode.

[Fig. 16] Fig. 16 illustrates the result of experiment regarding the amount of generated ozone.

[Fig. 17] Fig. 17 illustrates the result of experiment regarding a noise.

[Fig. 18] Fig. 18 illustrates the result of experiment regarding the amount of generated ozone and the noise.

[Fig. 19] Fig. 19 is a diagram for describing the inclination angle of a first surface with respect to a second surface of an ozone generating body according to a third embodiment.

[Fig. 20] Fig. 20 illustrates the result of experiment according to the third embodiment.

[Fig. 21] Fig. 21 is a plan view of an ozone generator according to a fourth embodiment where a finger guard is removed.

[Fig. 22] Fig. 22 is a sectional view of the same section as in Fig. 2 viewed sideways.

[Fig. 23] Fig. 23 is an enlarged view of a portion in the vicinity of the ozone generating body and a diffuser panel in Fig. 22.

[Fig. 24] Fig. 24 is a sectional view according to a fifth embodiment that corresponds to that in Fig. 2.

[Fig. 25] Fig. 25 is a sectional view according to the fifth embodiment that corresponds to that in Fig. 3.

[Fig. 26] Fig. 26 is a sectional view of the same section as in Fig. 24 viewed sideways.

[Fig. 27] Fig. 27 illustrates a portion of a section of an ozone generator according to a sixth embodiment that corresponds to that in Fig. 26.

[Fig. 28] Fig. 28 is a sectional view of an ozone generator according to a seventh embodiment that corresponds to that in Fig. 26.

[Fig. 29] Fig. 29 is a diagram for describing a method of measuring a swirl flow angle.

Description of Embodiments

1. First Embodiment

1-1. Structure of Ozone Generator

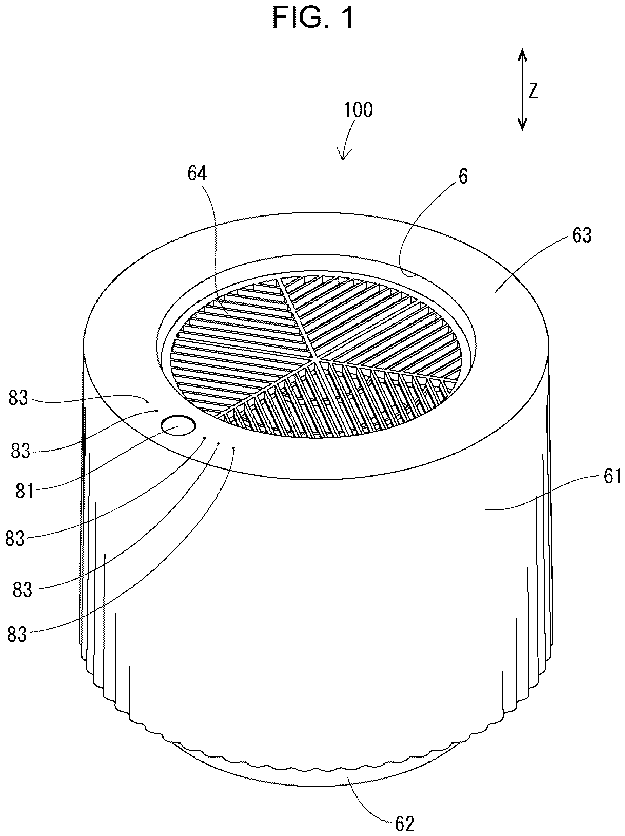

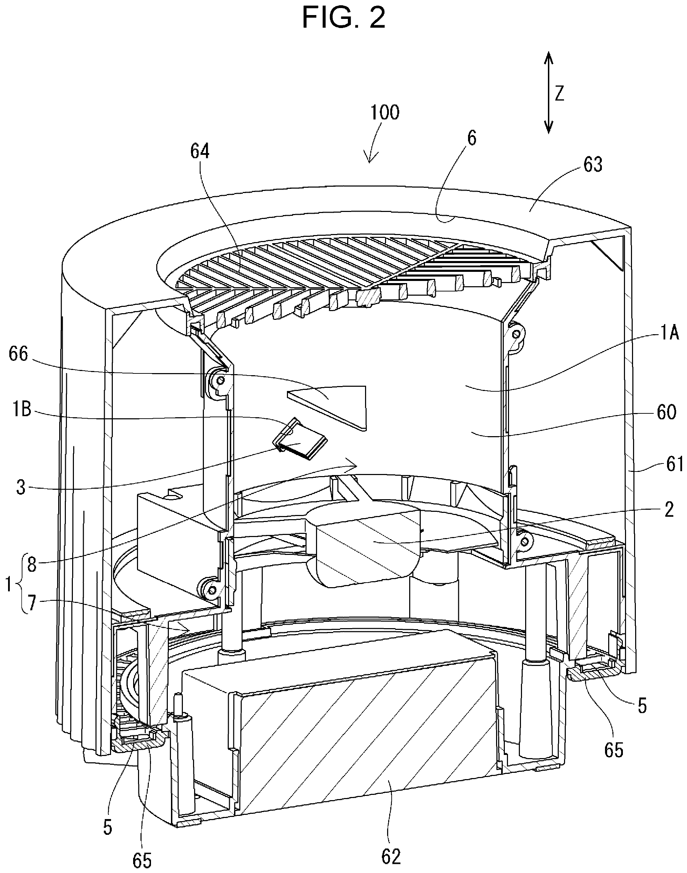

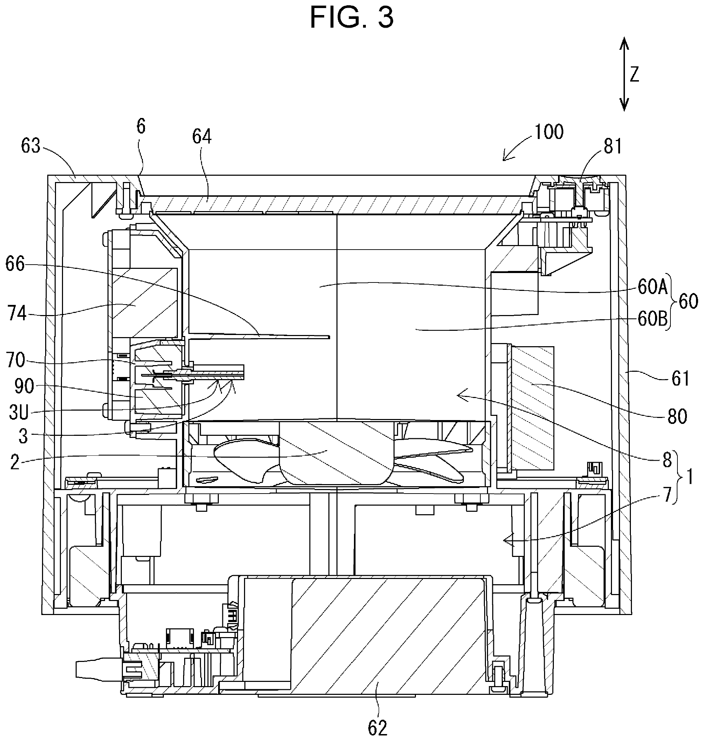

An ozone generator 100 illustrated in Fig. 1 is an apparatus that sucks outside air (air that contains oxygen), generates ozone from the oxygen in the air by using dielectric-barrier discharge, and discharges the ozone to the outside. As illustrated in Fig. 2 and Fig. 3, the ozone generator 100 includes a flow path 1 for gas, a fan 2, and an ozone generating body 3.

The flow path 1 includes intake ports 5 and an exhaust port 6. Gas (for example, air) outside the ozone generator 100 is taken in the flow path 1 via the intake ports 5. The gas in the flow path 1 is discharged to the outside of the ozone generator 100 via the exhaust port 6. The flow path 1 enables the gas sucked via the intake ports 5 to be discharged via the exhaust port 6.

The flow path 1 extends in a predetermined Z-direction (an up-down direction in the present embodiment). The intake ports 5 are disposed on one end side (a lower end side in the present embodiment) in the Z-direction and are opened to the one end side in the Z-direction (downward in the present embodiment). The suction direction of the intake ports 5 is a direction toward the other end side in the Z-direction (upward in the present embodiment). The exhaust port 6 is disposed on the other end side (an upper end in the present embodiment) in the Z-direction and is opened to the other end side in the Z-direction (upward according to the present embodiment). The exhaust direction of the exhaust port 6 is a direction toward the other end side in the Z-direction (upward in the present embodiment).

The intake ports 5 are disposed along an annular shape (specifically, a circular shape) the axial direction of which is the Z-direction. The exhaust port 6 is disposed inside an annular portion at which the intake ports 5 are disposed. The exhaust port 6 is disposed in a circular shape.

The flow path 1 includes a first flow path 7 and a second flow path 8 downstream of the first flow path 7. The first flow path 7 extends from the intake ports 5 toward the exhaust port 6. The first flow path 7 guides the gas sucked via the intake ports 5 in the annular shape to the inside of an inner circumference of the intake ports 5. The second flow path 8 extends to the other end side end in the Z-direction (upward in the present embodiment) from a downstream end portion of the first flow path 7 toward the exhaust port 6. A downstream end portion of the second flow path 8 is connected to the exhaust port 6. The second flow path 8 has an external shape smaller than the inner circumference of the intake ports 5 in the annular shape and guides the gas guided inward by the first flow path 7 toward the exhaust port 6 (upward in the present embodiment), and allows the gas to be discharged via the exhaust port 6.

The fan 2 is a device that generates airflow (specifically, swirl flow) in the flow path 1 and is an axial fan in the present embodiment. The fan 2 performs an air sending operation of sending gas from the intake ports 5 side to the exhaust port 6 side of the flow path 1. The fan 2 includes a motor (not illustrated). The motor is driven when power is supplied, whereby the fan 2 performs the air sending operation. The fan 2 is provided in the flow path 1 (specifically, the second flow path 8). The fan 2 is disposed with the central axis of the fan 2 extending in the Z-direction. The fan 2 rotates about the Z-direction.

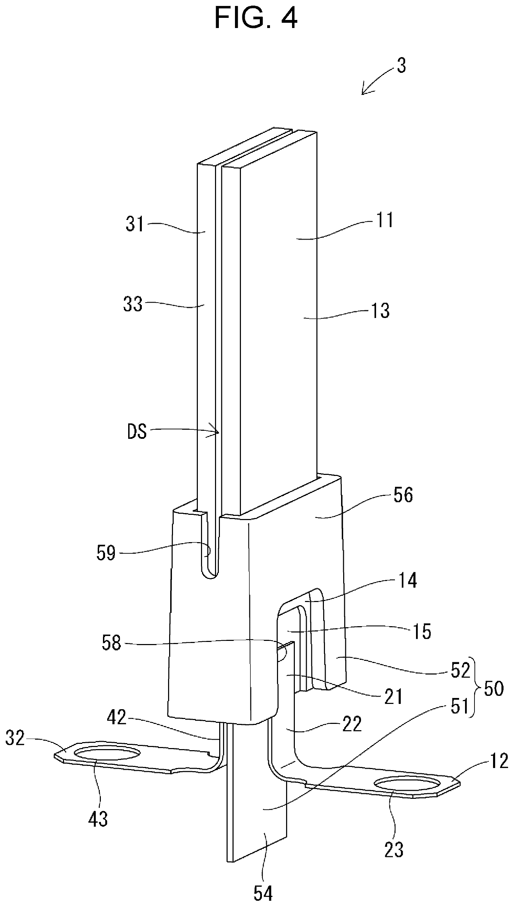

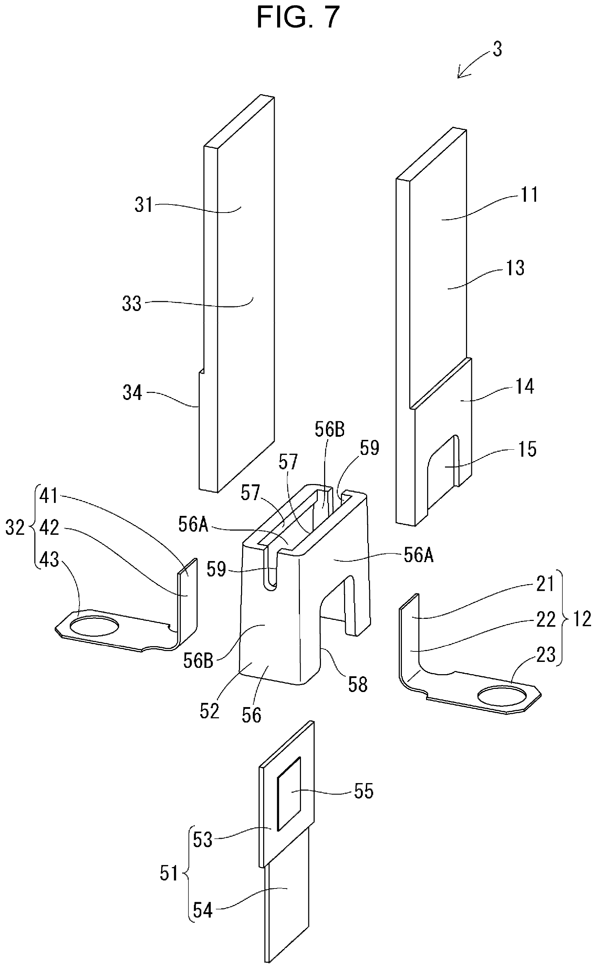

The ozone generating body 3 generates dielectric-barrier discharge in a discharge space DS described later when an alternating voltage is applied thereto, and generates ozone in the flow path 1 by using the oxygen in the air sucked via the intake ports 5 as a material. As illustrated in Fig. 4 to Fig. 7, the ozone generating body 3 includes a first electrode 10, a second electrode 30, a first dielectric 11, a second dielectric 31, a first terminal 12, a second terminal 32, and a support portion 50.

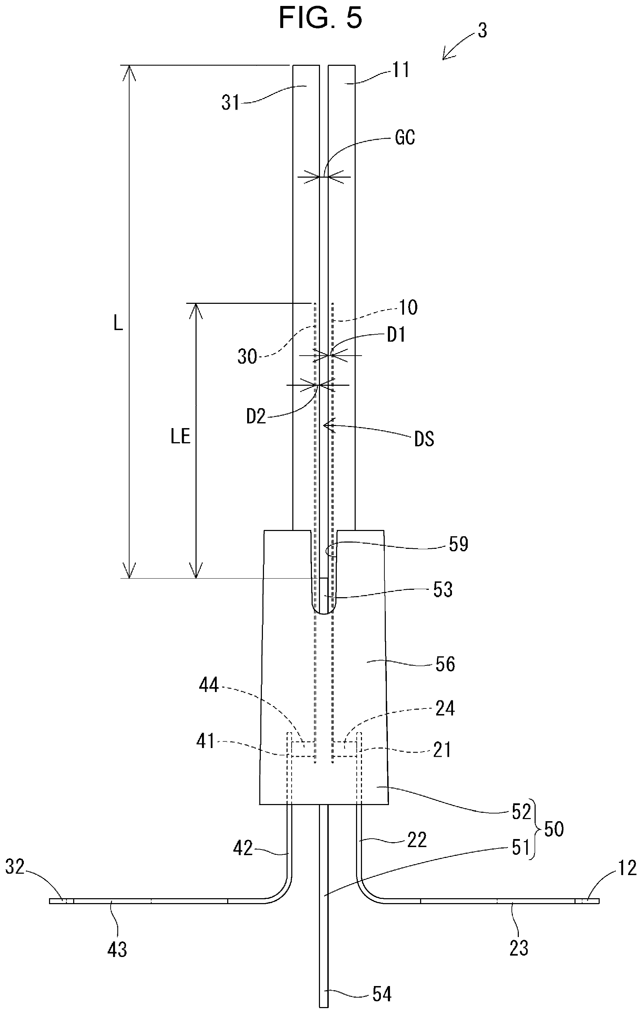

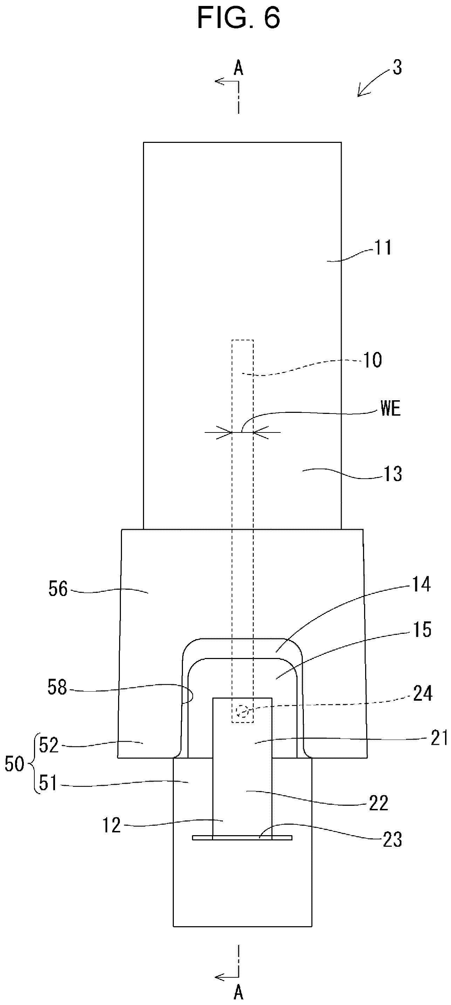

The first electrode 10 and the second electrode 30 are made of metal, and are formed by using tungsten (W) as a material in the present embodiment. The material is not limited to tungsten, but the first electrode 10 and the second electrode 30 may be formed by using, for example, molybdenum (Mo), silver (Ag), copper (Cu), or platinum (Pt) as a material. The first electrode 10 and the second electrode 30 are each formed as a thin metal layer, and are elongated in a predetermined direction. The thicknesses of the first electrode 10 and the second electrode 30 (the metal layers) are preferably 10 um or more from the viewpoint of ensuring adhesion strength, and are preferably 50 um or less from the viewpoint of preventing peeling due to excessive thicknesses. The widths and lengths of the first electrode 10 and the second electrode 30 are freely set depending on the required amount of ozone to be generated. The widths WE (see Fig. 6) of the first electrode 10 and the second electrode 30 are 1 mm. The lengths of the first electrode 10 and the second electrode 30 are set based on the lengths LE of portions that generate the discharge (the lengths LE of portions at which the support portion 50 is not present between the first electrode 10 and the second electrode 30) (see Fig. 5). The lengths LE are 10 mm.

The first dielectric 11 and the second dielectric 31 are formed by using alumina ($Al_2O_3$) as a material in the present embodiment. The material is not limited to alumina, but the first dielectric 11 and the second dielectric 31 may be formed by using other ceramics such as glass ($SiO_2$), aluminum nitride (AlN), or yttrium oxide ($Y_2O_3$) or a mixture thereof as a material. The first dielectric 11 covers the first electrode 10. The second dielectric 31 covers the second electrode 30. The first dielectric 11 and the second dielectric 31 each have a plate shape.

The first dielectric 11 and the second dielectric 31 are arranged in the thickness direction of the first dielectric 11 and the second dielectric 31. That is, the first dielectric 11 and the second dielectric 31 face each other in the thickness direction of the first dielectric 11 and the second dielectric 31. The discharge space DS is formed between the first dielectric 11 and the second dielectric 31. Surfaces that face each other are flat surfaces and have a rectangular shape. One of the surfaces that face each other extends along the other surface. One of the surfaces that face each other may be or may not be parallel with the other surface. The thickness direction of the first electrode 10 and the second electrode 30 is the same as the thickness direction of the first dielectric 11 and the second dielectric 31. Hereinafter, the direction in which the first dielectric 11 and the second dielectric 31 are arranged is referred to as a "direction of arrangement".

The first electrode 10 is disposed in the first dielectric 11 at a position near the second electrode 30 in the direction of arrangement. The second electrode 30 is disposed in the second dielectric 31 at a position near the first electrode 10 in the direction of arrangement. The first electrode 10 and the second electrode 30 are disposed, for example, so as to be printed on upper surfaces of thin dielectric layers. Thick dielectric layers are additionally formed thereon, and consequently, the first dielectric 11 which covers the first electrode 10 and the second dielectric 31 which covers the second electrode 30 are manufactured.

The thickness of a portion of the first dielectric 11 nearer than the first electrode 10 to the discharge space DS (a distance between a surface of the first electrode 10 that faces the discharge space DS and a surface of the first dielectric 11 that faces the discharge space DS) is designated as D1 (see Fig. 5). The thickness of a portion of the second dielectric 31 nearer than the second electrode 30 to the discharge space DS (a distance between a surface of the second electrode 30 that faces the discharge space DS and a surface of the second dielectric 31 that faces the discharge space DS) is designated as D2 (see Fig. 5). In this case, the minimum value of D1 + D2 is expressed as the following expression (1):

(Minimum value of D1 + D2) = (Voltage [kV] applied to Ozone generating body 3) / (Withstand voltage (kV/mm) of Material of First dielectric 11 and Second dielectric 31.    Expression (1)

The withstand voltage of alumina is 15 kV/mm. The minimum value of D1 + D2 is 0.3 mm when the peak value of a high alternating voltage is 4.5 kV. When D1 and D2 are too great, loss in the first dielectric 11 and the second dielectric 31 is increased, so that power efficiency is reduced. For this reason, the maximum value of D1 + D2 is about two times the minimum value of D1 + D2.

Specifically, D1 + D2 is preferably no less than 0.3 mm and no more than 0.6 mm. That is, D1 and D2 are preferably no less than 0.15 mm and no more than 0.3 mm. In the present embodiment, D1 and D2 are 0.15 mm in consideration of ease of manufacturing.

A direction (a longitudinal direction) in which the first electrode 10 and the second electrode 30 extend is the same as the longitudinal direction of the first dielectric 11 and the second dielectric 31 (hereinafter, simply referred to as the "longitudinal direction"). The longitudinal direction corresponds to an example of a "perpendicular direction that is perpendicular to the direction of arrangement of the first dielectric and the second dielectric". One end side (one side) in the longitudinal direction corresponds to an example of one end side (one side) in the perpendicular direction. The other end side (the other side) in the longitudinal direction corresponds to an example of the other end side (the other side) in the perpendicular direction. Hereinafter, the transverse direction of the first dielectric 11 and the second dielectric 31 is simply referred to as a "transverse direction".

The first dielectric 11 includes a first dielectric body 13, a first protruding portion 14, and a first recessed portion 15. The first dielectric body 13 has a plate shape and has a rectangular cuboid shape. The first dielectric body 13 covers the first electrode 10. The first protruding portion 14 projects outward from the first dielectric 11 (to the side opposite to the second dielectric 31 side) on one end side in the longitudinal direction. The first protruding portion 14 extends over the entire region of the first dielectric 11 in the transverse direction. The first protruding portion 14 is formed up to the one end of the first dielectric 11 in the longitudinal direction. The first recessed portion 15 is formed on the surface on the outer side (the side opposite to the second dielectric 31 side) of the first dielectric 11 on the one end side in the longitudinal direction. The form of the first recessed portion 15 is such that the first protruding portion 14 is recessed. The first recessed portion 15 is opened to the one end of the first dielectric 11 in the longitudinal direction.

The second dielectric 31 includes a second dielectric body 33, a second protruding portion 34, and a second recessed portion 35. The second dielectric body 33 has a plate shape and has a rectangular cuboid shape. The second dielectric body 33 covers the second electrode 30. The second dielectric body 33 faces the first dielectric body 13 and forms the discharge space DS between the second dielectric body 33 and the first dielectric body 13. The second protruding portion 34 projects outward from the second dielectric 31 (to the side opposite to the first dielectric 11 side) on one end side in the longitudinal direction. The second protruding portion 34 extends over the entire region of the second dielectric 31 in the transverse direction. The second protruding portion 34 is formed up to the one end of the second dielectric 31 in the longitudinal direction. The second recessed portion 35 is formed on the surface on the outer side (the side opposite to the first dielectric 11 side) of the second dielectric 31 on the one end side in the longitudinal direction. The form of the second recessed portion 35 is such that the second protruding portion 34 is recessed. The second recessed portion 35 is opened to the one end of the second dielectric 31 in the longitudinal direction.

Considering that the withstand voltage of air is about 3.0 kV/mm, a dielectric gap GC (see Fig. 5) which corresponds to a distance between the first dielectric 11 (specifically, the first dielectric body 13) and the second dielectric 31 (specifically, the second dielectric body 33) needs to be less than 1.5 mm for discharge in the case where the peak value of the alternating voltage that is applied to the ozone generating body 3 is 4.5 kV. However, in order to increase discharge time and to keep the discharge stable, the gap GC is preferably equal to or less than one third thereof, that is, 0.5 mm or less. When the dielectric gap GC is too small, air to be supplied lacks, and the amount of generated ozone decreases. For this reason, the dielectric gap GC is preferably 0.2 mm or more. For example, the dielectric gap GC is preferably 0.37 mm. In the case where the facing surfaces of the first dielectric 11 and the second dielectric 31 are not parallel with each other, the dielectric gap GC is based on the positions of the tip ends of the first electrode 10 and the second electrode 30 (the other ends in the longitudinal direction).

The natural frequencies Fn [Hz] of the first dielectric 11 and the second dielectric 31 are 200 Hz or more in a structure in which the first dielectric 11 and the second dielectric 31 are each supported at one end thereof. The natural frequencies Fn [Hz] may be derived from the result of experiment or may be obtained by using an arithmetic expression. In the case where the arithmetic expression is used, the natural frequencies Fn [Hz] can be obtained, for example, by the following expression (A):

[Math 1]

$$Fn = \frac{(Kn)^2}{2\pi} \sqrt{\frac{EI}{\rho AL^4}} \qquad \cdots \text{Expression (A)}$$

Kn is a constant and is 1.875 in the case where the first dielectric 11 and the second dielectric 31 are each supported at one end thereof. E [Pa] is the Young's modulus of each of the first dielectric 11 and the second dielectric 31. E [Pa] is about 280 GPa in the case where the first dielectric 11 and the second dielectric 31 are made of alumina.

I [m$^4$] is the second moment of area of each of the first dielectric 11 and the second dielectric 31. $\rho$ [kg/m$^3$] is the density of each of the first dielectric 11 and the second dielectric 31. A [m$^2$] is the sectional area of each of the first dielectric 11 and the second dielectric 31. L [m] is the length of the first dielectric 11 and the second dielectric 31 from a fixed end supported by the support portion 50 to a free end (see Fig. 5) .

It is necessary for L to be longer than the lengths LE of the first electrode 10 and the second electrode 30. When L is too long, the natural frequencies Fn [Hz] decrease. For this reason, in the present embodiment, L is 21.5 mm. In this case, the natural frequencies Fn [Hz] are 3500 Hz and greatly exceed 200 Hz. In a case where the thicknesses of the first dielectric 11 and the second dielectric 31 are 1.15 mm, and L is 90 mm or less, the natural frequencies Fn [Hz] are 200 Hz or more. Increasing the thicknesses of the first dielectric 11 and the second dielectric 31 enables the natural frequencies Fn [Hz] to be 200 Hz even when L is longer.

The first electrode 10 and the second electrode 30 have the same size and the same shape and are disposed so as to be plane-symmetrical. The first dielectric 11 and the second dielectric 31 have the same size and the same shape and are disposed so as to be plane-symmetrical.

The first electrode 10 and the second electrode 30 have the same size and the same shape and are disposed so as to be plane-symmetrical. The first dielectric 11 and the second dielectric 31 have the same size and the same shape and are disposed so as to be plane-symmetrical.

The first terminal 12 and the second terminal 32 are made of metal and have a plate shape. The first terminal 12 is disposed on a side of the first dielectric 11 opposite to a spacer 51 side. The second terminal 32 is disposed on a side of the second dielectric 31 opposite to the spacer 51 side. The first terminal 12 is disposed on the first recessed portion 15. The second terminal 32 is disposed on the second recessed portion 35. The first terminal 12 is electrically connected to the first electrode 10. The second terminal 32 is electrically connected to the second electrode 30. The first terminal 12 and the second terminal 32 each have an L-shape when viewed in the transverse direction.

The first terminal 12 includes a first connection portion 21, a first projecting portion 22, and a third connection portion 23. As illustrated in Fig. 5 and Fig. 6, the first connection portion 21 is electrically connected to the first electrode 10 via a first conductive portion 24 provided in the first dielectric 11. In the present embodiment, the first conductive portion 24 is a via that is formed in the first dielectric 11. The first conductive portion 24 extends from the first electrode 10 to the surface on the outer side (the side opposite to the second dielectric 31 side) of the first dielectric 11. The first conductive portion 24 is exposed at the surface on the outer side (the side opposite to the second dielectric 31 side) of the first dielectric 11. A land is formed at the exposed portion of the first conductive portion 24. The first connection portion 21 is brazed to the land. Thus, the first terminal 12 is electrically connected to the first electrode 10. The first projecting portion 22 is continuous with one end of the first connection portion 21 and projects further toward the one end side than the end portion of the first dielectric 11. That is, the first projecting portion 22 projects from the one end of the first dielectric 11 in a direction away from the first dielectric 11 when viewed in the direction of arrangement. The third connection portion 23 is bent from the end (one end on the one end side) of the first projecting portion 22 and extends in the direction of arrangement.

The second terminal 32 includes a second connection portion 41, a second projecting portion 42, and a fourth connection portion 43. The second connection portion 41 is electrically connected to the second electrode 30 via a second conductive portion 44 provided in the second dielectric 31. In the present embodiment, the second conductive portion 44 is a via that is formed in the second dielectric 31. The second connection portion 41 is connected to the second electrode 30 as in the connection between the first connection portion 21 and the first electrode 10 described above. The second projecting portion 42 is continuous with one end of the second connection portion 41 and projects further toward the one end side than the end portion of the second dielectric 31. That is, the second projecting portion 42 projects from the one end of the second dielectric 31 in a direction away from the second dielectric 31 when viewed in the direction of arrangement. The fourth connection portion 43 is bent from the end (one end on the one end side) of the second projecting portion 42 and extends in the direction of arrangement. The third connection portion 23 and the fourth connection portion 43 extend in opposite directions.

The support portion 50 supports the first dielectric 11 and the second dielectric 31. The support portion 50 supports the first dielectric 11 and the second dielectric 31 at the one end side in the longitudinal direction. That is, the support portion 50 supports the first dielectric 11 and the second dielectric 31 at the ends on the same side. The Young's modulus of the support portion 50 is lower than those of the first dielectric 11 and the second dielectric 31. The support portion 50 is formed by using resin (such as polycarbonate (PC), ABS, PVC, or PP) as a material. The Young's moduli of these materials are about 1 GPa to 2.5 GPa and are greatly low as compared with the Young's modulus of alumina, which is 280 GPa. Therefore, the vibration of the first dielectric 11 and the second dielectric 31 formed of alumina is easily absorbed by the support portion 50.

The support portion 50 includes the spacer 51 and a holder 52. The holder 52 is formed by using, for example resin (such as PE, PP, PS, ABS, PVC, PET, POM, PC, PBT, PPS, PEI, PTFE, or PAI) or ceramics as a material.

The spacer 51 is disposed between the first dielectric 11 and the second dielectric 31 at the one end side in the longitudinal direction and allows the discharge space DS to be formed between the first dielectric 11 and the second dielectric 31 at the other end side in the longitudinal direction. The spacer 51 is a member that differs from a resin member 89 described later. That is, the spacer 51 is a single component (component that is not a combination of multiple separated components) and is another member that differs from the resin member 89. The spacer 51 is combined with the resin member 89 into a single piece after the resin member 89 is formed, but is a single component at the point of time when the support portion 50 is mounted on the first dielectric 11 and the second dielectric 31 (at the point of time when the spacer 51 is disposed between the first dielectric 11 and the second dielectric 31). The spacer 51 has a plate shape. The spacer 51 is disposed such that the thickness direction coincides with the direction of arrangement of the first dielectric 11 and the second dielectric 31. The spacer 51 includes a spacer portion 53 that is disposed between the first dielectric 11 and the second dielectric 31 and an extension portion 54 which extends from the spacer portion 53 toward the one end side in the longitudinal direction and is disposed between the first projecting portion 22 and the second projecting portion 42. In this way, the distance between the first dielectric 11 and the second dielectric 31 can be easily set by the spacer 51, and insulation between a first conductor portion 3X and a second conductor portion 3Y can be ensured.

The spacer portion 53 has a plate shape. In the transverse direction, the spacer portion 53 is within the range of the first dielectric 11 and the second dielectric 31. One end of the spacer portion 53 in the longitudinal direction is disposed closer to the other end side than the one end of each of the first dielectric 11 and the second dielectric 31 in the longitudinal direction. The other end of the spacer portion 53 in the longitudinal direction is disposed closer to the one end side than the other end of each of the first protruding portion 14 and the second protruding portion 34.

The extension portion 54 has a plate shape. The thickness of the extension portion 54 is less than that of the spacer portion 53. The thickness of the extension portion 54 may not necessarily be less than that of the spacer portion 53, but may be, for example, equal to that of the spacer portion 53. In the transverse direction, the extension portion 54 extends to the outside of both end portions of the first terminal 12 and the second terminal 32. In the longitudinal direction, the extension portion 54 extends closer to the one end side than the end portion, on the one end side, of each of the first terminal 12 and the second terminal 32. That is, the extension portion 54 extends in a direction away from the first dielectric 11 and the second dielectric 31 in the longitudinal direction more than the first terminal 12 and the second terminal 32.

The ozone generating body 3 includes double-sided tapes 55 for adhering the first dielectric 11 and the second dielectric 31 to the spacer 51. The first dielectric 11 and the second dielectric 31 are adhered to the spacer portion 53 of the spacer 51 by double-sided tapes 55. Instead of the double-sided tapes 55, an adhesive may be applied to the spacer 51.

The spacer 51 is formed by using, for example, resin (such as PE, PP, PS, ABS, PVC, PET, POM, PC, PBT, PPS, PEI, PTFE, or PAI) or ceramics as a material. In an example of the present embodiment, the spacer 51 is formed by using PET as a material.

The holder 52 is a member that holds the first dielectric 11 and the second dielectric 31 with the spacer 51 interposed therebetween. The holder 52 has an annular shape (specifically, a rectangular tube shape) and is disposed so as to surround the outer circumferences of the first dielectric 11 and the second dielectric 31 with the spacer 51 interposed therebetween. The holder 52 may have a circular shape or may not have a circular shape. The holder 52 includes a holder body 56, engagement portions 57, first notch portions 58, and second notch portions 59.

The holder body 56 has an annular shape (specifically, a rectangular tube shape). The holder body 56 may have a circular shape or may not have a circular shape. The holder body 56 includes a pair of first wall portions 56A disposed on both sides in the direction of arrangement and a pair of second wall portions 56B disposed on both sides in the transverse direction.

The engagement portions 57 project inward from inner surfaces of the holder body 56 on the other end side in the longitudinal direction. The engagement portions 57 project from each of the inner surfaces of the first wall portions 56A. The engagement portions 57 are formed over the entire regions of the first wall portions 56A in the transverse direction.

The first notch portions 58 are cut such that the first terminal 12 and the second terminal 32 are exposed. The form of the first notch portions 58 is such that the end portions of the first wall portions 56A on the one end side in the longitudinal direction are cut.

The second notch portions 59 are cut such that the discharge space DS is exposed. The form of the second notch portions 59 is such that the end portions of the second wall portions 56B on the other end side in the longitudinal direction are cut. One end of each of the second notch portions 59 in the longitudinal direction is disposed closer to the other end side than the other end of each of the first notch portions 58 in the longitudinal direction. The widths (distances in the direction of arrangement) of the second notch portions 59 are preferably greater than the dielectric gap GC.

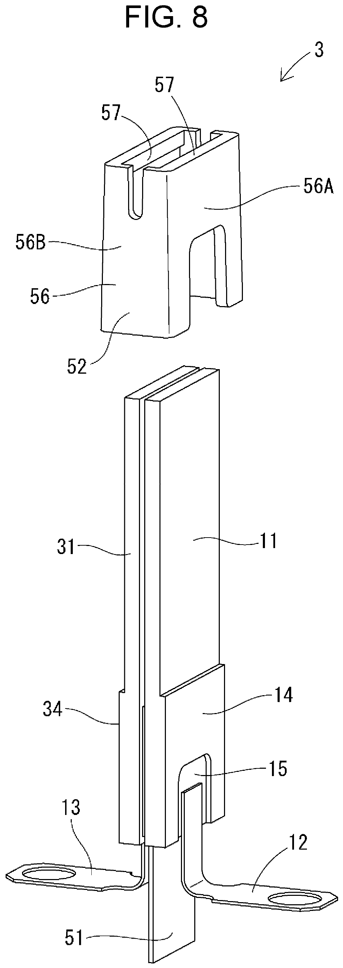

As illustrated in Fig. 8, the holder 52 is inserted onto the first dielectric 11 and the second dielectric 31 with the spacer 51 interposed therebetween from the other end side thereof in the longitudinal direction. The holder 52 is positioned by bringing the engagement portions 57 into contact with end portions of the first protruding portion 14 of the first dielectric 11 and the second protruding portion 34 of the second dielectric 31 in the longitudinal direction. The following expression (2) and an expression (3) are satisfied:

$$L1 \leq L4, \cdots \text{Expression (2)}$$

$$L4 < L2 \leq L3, \cdots \text{Expression (3)}$$

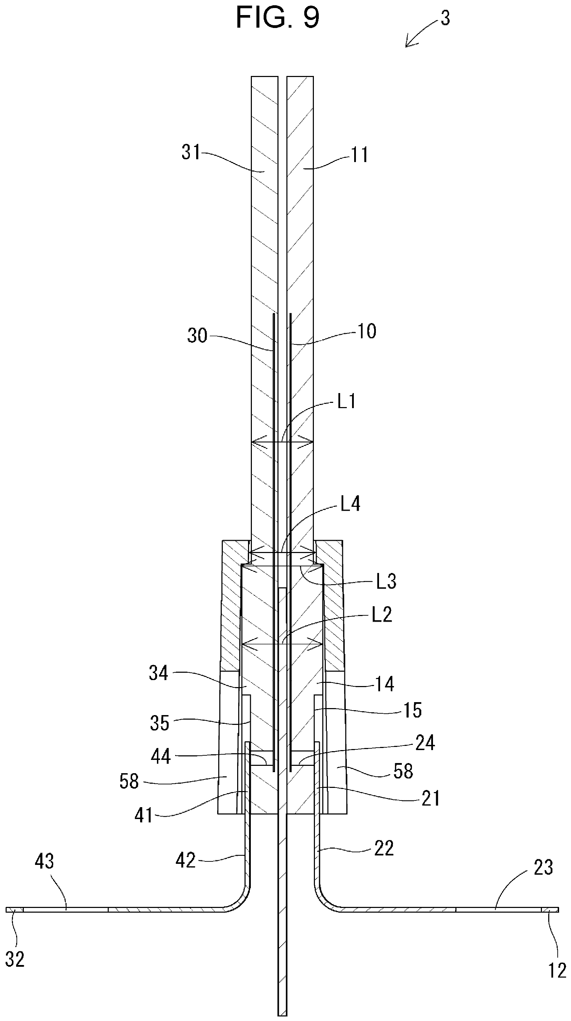

wherein, as illustrated in Fig. 9, in the direction of arrangement , L1 is a distance between the outer surfaces of the first dielectric body 13 and the second dielectric body 33 with the spacer 51 interposed therebetween, L2 is a distance between the outer surfaces of the first protruding portion 14 and the second protruding portion 34 with the spacer 51 interposed therebetween, L3 is the minimum distance between the inner surfaces of the pair of the second wall portions 56B of the holder 52, and L4 is a distance between the inner surfaces of the pair of the engagement portions 57 of the holder 52.

As illustrated in Fig. 2 and Fig. 3, the ozone generator 100 includes a flow path component 60, a peripheral wall portion 61, a bottom portion 62, a ceiling portion 63, a finger guard 64, an intake portion 65, and a diffuser panel 66.

The flow path component 60 defines the flow path 1. The flow path 1 is provided inside the flow path component 60. The structure of the flow path component 60 includes multiple (two in the present embodiment) divided bodies that are divided in the circumferential direction. Specifically, the flow path component 60 includes a first divided body 60A and a second divided body 60B which are divided in the circumferential direction, and the first divided body 60A and the second divided body 60B are coupled with each other.

The peripheral wall portion 61 has an annular shape (specifically, a cylindrical shape, more specifically, a circular cylindrical shape) and surrounds the outer circumferences of the flow path component 60 and the flow path 1. The diameter (the outer diameter of the peripheral wall portion 61) of the outer circumference of the ozone generator 100 is, for example, 225 mm. The height of the ozone generator 100 is, for example, 204 mm.

The bottom portion 62 is placed on a placement surface. The bottom portion 62 supports the flow path component 60 disposed above the bottom portion 62. The bottom portion 62 is contained inside the intake ports 5 that are disposed in an annular shape. The bottom portion 62 has an external shape smaller than the inner circumference of the peripheral wall portion 61.

The ceiling portion 63 is disposed at the other end side in the Z-direction in the ozone generator 100, and has an annular shape the axial direction of which is the Z-direction. The exhaust port 6 is formed inside the ceiling portion 63. The outer circumference of the ceiling portion 63 is coupled with an end portion on the other end side (an upper end portion in the present embodiment) of the peripheral wall portion 61, and the ceiling portion 63 is formed integrally with the peripheral wall portion 61. The peripheral wall portion 61 and the ceiling portion 63 are disposed above the flow path component 60 with the finger guard 64 interposed therebetween, and are supported by the flow path component 60. The peripheral wall portion 61 is supported so as to be separated from the placement surface.

The finger guard 64 has a planar shape (a disk shape in the present embodiment) having multiple through-holes. The through-holes each have a slit shape. The finger guard 64 has a function of preventing a foreign substance (for example, a finger) from entering from the outside while allowing gas in the flow path 1 to be discharged. The finger guard 64 is another member that differs from the flow path component 60 and the ceiling portion 63. The finger guard 64 is disposed downstream of the ozone generating body 3 and is disposed downstream of the diffuser panel 66.

The intake portion 65 forms the intake ports 5 and has an annular shape. The intake portion 65 is disposed between an inner circumference of a lower end of the peripheral wall portion 61 and an outer circumference of an upper end of the bottom portion 62, and is engaged with the flow path component 60. The intake portion 65 has the multiple intake ports 5. The multiple intake ports 5 are annularly arranged along the intake portion 65 in an annular shape. The intake ports 5 are elongated in a radial direction.

The diffuser panel 66 for diffusing the ozone that is generated by the ozone generating body 3 in the flow path 1. The diffuser panel 66 is disposed downstream of the ozone generating body 3 in the flow path 1. The diffuser panel 66 projects inward from a wall surface 1A of the flow path 1. The diffuser panel 66 projects from a portion of the wall surface 1A in the circumferential direction. The width of the diffuser panel 66 decreases as being farther away from the wall surface 1A. The diffuser panel 66 has a sectorial shape. The diffuser panel 66 is disposed so as to overlap the ozone generating body 3 when viewed from a second end in the Z-direction. The diffuser panel 66 is formed integrally with the flow path component 60 (specifically, the first divided body 60A).

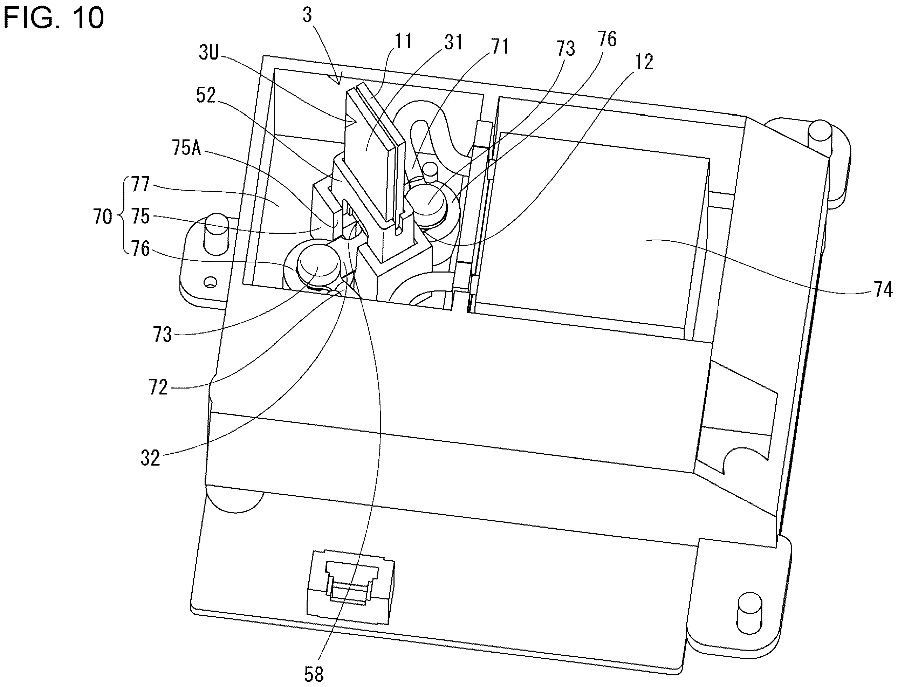

As illustrated in Fig. 3, Fig. 10, and Fig. 12, the ozone generator 100 includes a holding portion 70, a first partner terminal 71, a second partner terminal 72, screws 73, an alternating power supply 74, and the resin member 89. The ozone generating body 3 constitutes an ozone generating unit 3U together with the holding portion 70, the first partner terminal 71, the second partner terminal 72, the screws 73, the alternating power supply 74, and the resin member 89. The first partner terminal 71 corresponds to a "first wiring line" according to the present disclosure. The second partner terminal 72 corresponds to a "second wiring line" according to the present disclosure. The first partner terminal 71 is electrically connected to the first terminal 12. The second partner terminal 72 is electrically connected to the second terminal 32. The first partner terminal 71 and the first terminal 12 constitute the first conductor portion 3X. The first conductor portion 3X is electrically connected to the first electrode 10, and extends from one end side of the first dielectric 11 in the perpendicular direction that is perpendicular to the direction of arrangement of the first dielectric 11 and the second dielectric 31 (that is, the one end side in the longitudinal direction). The second partner terminal 72 and the second terminal 32 constitute the second conductor portion 3Y. The second conductor portion 3Y is electrically connected to the second electrode 30, and extends from one end side of the second dielectric 31 in the longitudinal direction (the same side as the first conductor portion 3X).

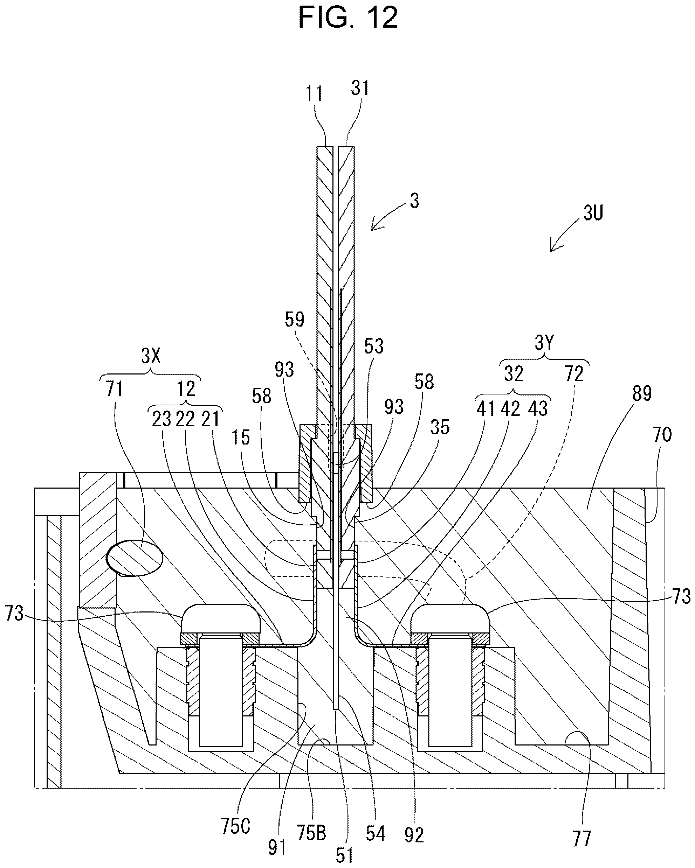

As illustrated in Fig. 12, the first conductor portion 3X (more specifically, the first connection portion 21 and the first projecting portion 22) and the second conductor portion 3Y (more specifically, the second connection portion 41 and the second projecting portion 42) face each other in the direction of arrangement described above. The resin member 89 (thermosetting resin) described later is provided between the first conductor portion 3X (more specifically, the first connection portion 21 and the first projecting portion 22) and the second conductor portion 3Y (more specifically, the second connection portion 41 and the second projecting portion 42) facing each other.

The holding portion 70 holds the ozone generating body 3. The holding portion 70 includes a first container portion 75, terminal-fixing portions 76, and a second container portion 77. The first container portion 75 has a bottom surface 75B and includes a surrounding portion 75C which projects from the bottom surface 75B and surrounds the outer circumference of the holder 52. One end side of the holder 52 in the longitudinal direction is contained in the first container portion 75. At least a portion of the holder 52 projects from an opening end of the first container portion 75. In this way, the distance between the first dielectric 11 and the second dielectric 31 can be kept constant by the spacer 51 and the holder 52, and also the first dielectric 11 and the second dielectric 31 can be held by the holding portion 70.

The first container portion 75 has a notch groove 75A in which the first terminal 12 and the second terminal 32 of the ozone generating body 3 are fitted. The terminal-fixing portions 76 are provided for the first terminal 12 and the second terminal 32. The terminal-fixing portions 76 include internal screw portions. The third connection portion 23 of the first terminal 12 is fixed to one of the terminal-fixing portions 76 by using the screw 73 together with the first partner terminal 71. The fourth connection portion 43 of the second terminal 32 is fixed to the other terminal-fixing portion 76 by using the screw 73 together with the second partner terminal 72. The first partner terminal 71 and the second partner terminal 72 are electrically connected to the alternating power supply 74.

The second container portion 77 contains one end side of the ozone generating body 3 in the longitudinal direction contained in the first container portion 75, and contains at least the whole of the first terminal 12 and the whole of the second terminal 32. The inside of the second container portion 77 is molded with thermosetting resin up to a position at which at least the whole of the first terminal 12 and the whole of the second terminal 32 are embedded. That is, the resin member 89 composed of thermosetting resin is provided in the second container portion 77. The resin member 89 is embedded also in the first container portion 75. The first conductor portion 3X and the second conductor portion 3Y are embedded in the thermosetting resin (the resin member 89). The thermosetting resin is provided between the first conductor portion 3X and the second conductor portion 3Y, so that the first conductor portion 3X and the second conductor portion 3Y are insulated from each other. Insulation between the first conductor portion 3X and the second conductor portion 3Y can be ensured by the thermosetting resin (the resin member 89), an electric current can be prevented from leaking between the first conductor portion 3X and the second conductor portion 3Y. The first conductor portion 3X and the second conductor portion 3Y can be arranged at one end side in the longitudinal direction (cantilever supporting structure), so that ozone generating body 3 can be made compact. In addition, the spacer portion 53 (the extension portion 54) is disposed between the first terminal 12 (the first projecting portion 22) and the second terminal 32 (the second projecting portion 42) as described above, and accordingly, the first terminal 12 and the second terminal 32 can be insulated from each other more reliably. The thermosetting resin (the resin member 89) that is provided inside the first notch portions 58 covers the first terminal 12 and the second terminal 32. As illustrated in Fig. 12, a part (one end in the longitudinal direction) of the first dielectric 11 and a part (one end in the longitudinal direction) of the second dielectric 31 are embedded in the resin member 89, but an upper end (a surface that is exposed to the opening of the second container portion 77) of the resin member 89 is located below the lower ends (one end in the longitudinal direction) of the second notch portions 59 (near the bottom portion of the second container portion 77). At least a portion of the holder 52 (specifically, at least a portion nearer to the other end side than the one end of the second notch portion 59 in the longitudinal direction) projects from molded resin.

Examples of the thermosetting resin of which the resin member 89 is made include PF, EP (epoxy resin), PUR, DAP, and SI. In an example of the present embodiment, the thermosetting resin of which the resin member 89 is made is EP.

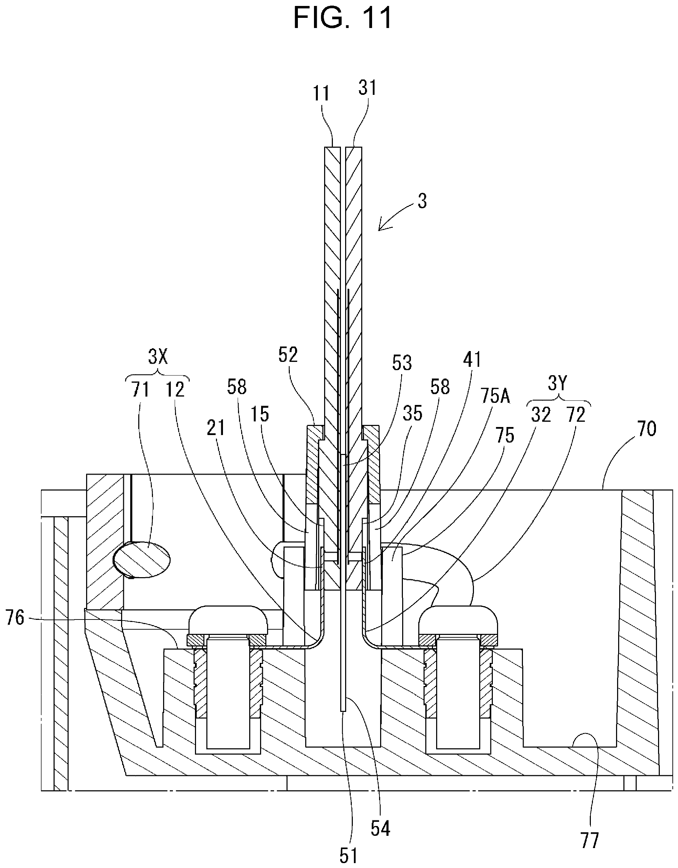

As illustrated in Fig. 12, the resin member 89 includes a first portion 91, a second portion 92, and a pair of third portions 93. The first portion 91 is filled in the first container portion 75 at a lower end. The first portion 91 has a U-shape in a sectional view illustrated in Fig. 12 and covers a lower end portion of the extension portion 54. The second portion 92 is filled at the lower end of the first dielectric 11, at the lower end of the second dielectric 31, and between the first terminal 12 and the second terminal 32. The second portion 92 interposes an upper end portion of the extension portion 54 therein in the direction of arrangement. The first portion 91 and the second portion 92 are continuous with each other into a single piece and are filled in the first container portion 75. For example, resin heated and softened is filled in the first container portion 75 via the notch groove 75A (see Fig. 11) of the first container portion 75, and subsequently hardened, whereby the first portion 91 and the second portion 92 are molded.

As illustrated in Fig. 12, the pair of third portions 93 interposes the first terminal 12 (specifically, the first projecting portion 22) and the second terminal 32 (specifically, the second projecting portion 42) therebetween. The third portion 93 for the first dielectric 11 is filled in the first notch portion 58 of the holder 52 and in the first recessed portion 15 of the first dielectric 11. The third portion 93 for the first dielectric 11 covers the third connection portion 23 of the first terminal 12 from above. The third portion 93 for the first dielectric 11 is filled up to the inside of a bent portion (a portion between the first projecting portion 22 and the third connection portion 23) of the first terminal 12. The third portion 93 for the second dielectric 31 is filled in the first notch portion 58 of the holder 52 and in the second recessed portion 35 of the second dielectric 31. The third portion 93 for the second dielectric 31 covers the fourth connection portion 43 of the second terminal 32 from above. The third portion 93 for the second dielectric 31 is filled up to the inside of a bent portion (a portion between the second projecting portion 42 and the fourth connection portion 43) of the second terminal 32.

As illustrated in Fig. 12, the first partner terminal 71 and the second partner terminal 72 are surrounded by the resin member 89. Therefore, the first partner terminal 71 and the second partner terminal 72 are fixed by the resin member 89 and looseness can be prevented. The resin member 89 covers the heads of the screws 73 from above.

The holding portion 70 is fixed to the outer surface of the flow path component 60. As illustrated in Fig. 3, the holding portion 70 is disposed outside the wall surface 1A of the flow path 1. The support portion 50 of the ozone generating body 3 is supported outside the wall surface 1A. Consequently, the one end of the first dielectric 11 in the longitudinal direction and the one end of the second dielectric 31 in the longitudinal direction are supported by the flow path component 60. An opening portion 1B through which the ozone generating body 3 projects inward is formed in the wall surface 1A of the flow path 1. The first dielectric 11 and the second dielectric 31 of the ozone generating body 3 project from the opening portion 1B to the inside of the wall surface 1A. At least a part of the first electrode 10 and at least a part of the second electrode 30 are disposed inside the wall surface 1A. The holder 52 also projects from the opening portion 1B to the inside of the wall surface 1A. Consequently, the other end of the first dielectric 11 in the longitudinal direction and the other end of the second dielectric 31 in the longitudinal direction are away from the inner wall surface (the wall surface 1A) of the flow path component 60.

The alternating power supply 74 includes a transformer and can supply alternating current power. The alternating power supply 74 produces desired alternating current power based on power supplied from a commercial power supply outside the ozone generator 100, and supplies the power to, for example, the ozone generating body 3.

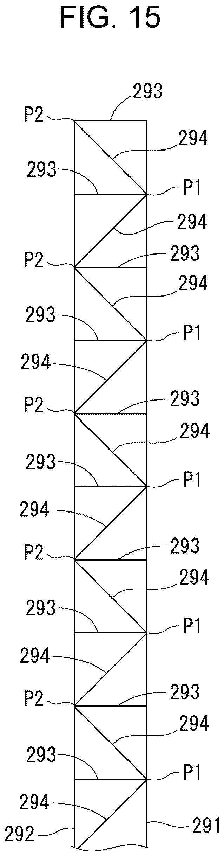

As illustrated in Fig. 15, the ozone generator 100 includes a controller 80, an operation portion 81, an ozone detector 82, a display 83, and a sound output portion 84. The controller 80 controls the operation of the ozone generator 100. The controller 80 is configured mainly by a microcomputer, and includes, for example, a CPU, a ROM, a RAM, and a drive circuit.

The operation portion 81 is, for example, a switch that switches between an on-state and an off-state by being pressed, such as a tactile switch. A signal representing the result of the operation of the operation portion 81 is inputted into the controller 80. The ozone detector 82 detects ozone concentration in air outside the ozone generator 100. A signal representing the detection value of the ozone detector 82 is inputted into the controller 80.

The controller 80 can control the operation of the ozone generating body 3 via the alternating power supply 74. The controller 80 controls the alternating voltage to be applied to the ozone generating body 3, and can consequently adjust the amount of the ozone generated by the ozone generating body 3. The controller 80 can adjust the amount of the ozone to be generated, based on the result of the operation of the operation portion 81. The controller 80 can implement feedback control on the operation of the ozone generating body 3 based on the ozone concentration detected by the ozone detector 82 such that the ozone concentration approaches a target value.

The controller 80 can control the operation of the fan 2. The controller 80 supplies a PWM signal to the fan 2 and consequently controls the fan 2 under PWM control. Thus, the controller 80 can adjust air volume.

The controller 80 can control the operation of the display 83. The display 83 is, for example, a LED lamp. The display 83 indicates, for example, an on/off state of the power supply, an operation state of the fan 2, and an ozone concentration in the outside, by the lightning state of the LED.

The controller 80 can control the operation of the sound output portion 84. The sound output portion 84 outputs a sound, and is, for example, a buzzer. For example, the sound output portion 84 outputs a warning sound in a case where the ozone generator 100 malfunctions.

1-2. Effects according to First Embodiment

According to a first embodiment, the Young's modulus of the support portion 50 is lower than those of the first dielectric 11 and the second dielectric 31. Therefore, a stress is less likely to be applied to a portion supported by the support portion 50 even when the first dielectric 11 or the second dielectric 31 vibrates. Accordingly, the first dielectric 11 and the second dielectric 31 are unlikely to be damaged.

Furthermore, since the first dielectric 11 and the second dielectric 31 are supported at the ends on the same side, a portion between the first dielectric 11 and the second dielectric 31 at the other end side in the longitudinal direction can be opened. Accordingly, gas easily enters the discharge space DS formed between the first dielectric 11 and the second dielectric 31. Consequently, the efficiency of generation of ozone can be improved.

Furthermore, the support portion 50 includes the spacer 51 which is disposed between the first dielectric 11 and the second dielectric 31. Therefore, the distance between the first dielectric 11 and the second dielectric 31 can be easily set the spacer 51.

Furthermore, the support portion 50 includes the extension portion 54 which extends from the spacer portion 53 and is disposed between the first projecting portion 22 and the second projecting portion 42. Therefore, the first terminal 12 and the second terminal 32 can be insulated from each other more reliably.

Furthermore, the third connection portion 23 of the first terminal 12 it bent and extends from the end of the first projecting portion 22. Accordingly, the first terminal 12 can be inhibited from expanding in the projecting direction of the first projecting portion 22. The fourth connection portion 43 of the second terminal 32 is bent and extends from the end of the second projecting portion 42. Accordingly, the second terminal 32 can be inhibited from expanding in the projecting direction of the second projecting portion 42.

Furthermore, the support portion 50 includes the holder 52 which holds the first dielectric 11 and the second dielectric 31 with the spacer 51 interposed therebetween. Therefore, the distance between the first dielectric 11 and the second dielectric 31 can be kept constant by the spacer 51 and the holder 52 of the support portion 50.

Furthermore, the holder 52 has an annular shape that surrounds the outer circumferences of the first dielectric 11 and the second dielectric 31 with the spacer 51 interposed therebetween. Therefore, the first dielectric 11 and the second dielectric 31 with the spacer 51 interposed therebetween can be easily assembled by being inserted into the hole of the holder 52.

Furthermore, the holder 52 includes the first notch portions 58 which are cut such that the first terminal 12 and the second terminal 32 are exposed. Therefore, the first terminal 12 and the second terminal 32 are easily filled with resin via the first notch portions 58.

Furthermore, the holder 52 includes the second notch portions 59 which are cut such that the discharge space DS is exposed. Therefore, the holder 52 surrounds the outer circumferences of the first dielectric 11 and the second dielectric 31, but gas can be allowed to enter the discharge space DS via the second notch portions 59. Accordingly, reduction in the amount of the gas entering the discharge space DS due to the provision of the holder 52 can be reduced.

Furthermore, the first dielectric 11 and the second dielectric 31 are made of ceramics, and the support portion 50 is made of resin. Therefore, while the first dielectric 11 and the second dielectric 31 are made of ceramics, the first dielectric 11 and the second dielectric 31 can be inhibited from being damaged in a case where a stress is applied to the portion supported by the support portion 50 when a vibration is transmitted thereto.

Furthermore, the natural frequencies Fn of the first electrode 10 and the second electrode 30 are 200 Hz or more. Therefore, a vibration due to resonance can be reduced in a situation where a vibration is transmitted from the outside, for example, during transportation. As a result, a stress applied to the first dielectric 11 and the second dielectric 31 during vibrating is reduced, and accordingly, damage thereto is less likely to occur.

Furthermore, the support portion 50 includes the double-sided tapes 55 for adhering the first dielectric 11 and the second dielectric 31 to the spacer 51. Therefore, it is easy to adhere the first dielectric 11 and the second dielectric 31 to the spacer 51.

Furthermore, the support portion 50 of the ozone generating body 3 supports the first dielectric 11 and the second dielectric 31 at the one end side in the longitudinal direction and is held outside the wall surface 1A of the flow path 1. The first dielectric 11 and the second dielectric 31 of the ozone generating body 3 project inward from the wall surface 1A. Therefore, as compared with a structure in which ends on both sides are supported or a structure in which ends on alternate opposite sides are each supported, a structure for fixing the ozone generating body 3 and wiring can be concentrated, and accordingly, the structure of the ozone generator 100 can be made simple.

Furthermore, according to the first embodiment, the thermosetting resin (the resin member 89) is provided between the first conductor portion 3X and the second conductor portion 3Y, so that the first conductor portion 3X and the second conductor portion 3Y are insulated from each other. Since the first conductor portion 3X and the second conductor portion 3Y extend from the one end side of the first dielectric 11 and the second dielectric 31, the distance between the first conductor portion 3X and the second conductor portion 3Y is short. However, the thermosetting resin (the resin member 89) is provided between the first conductor portion 3X and the second conductor portion 3Y, so that the first conductor portion 3X and the second conductor portion 3Y are insulated from each other. Accordingly, insulation between the first conductor portion 3X and the second conductor portion 3Y can be ensured by the thermosetting resin (the resin member 89).

Furthermore, the ozone generating body 3 is a member that differs from the thermosetting resin (the resin member 89) and includes the spacer 51 which is disposed between the first dielectric 11 and the second dielectric 31. Therefore, the distance between the first dielectric 11 and the second dielectric 31 to be easily set by the spacer 51, and insulation between the first dielectric 11 and the second dielectric 31 can be ensured.

Furthermore, the spacer 51 includes the extension portion 54 which extends from the spacer portion 53 and is disposed between the first projecting portion 22 and the second projecting portion 42. Therefore, insulation between the first projecting portion 22 and the second projecting portion 42 can be ensured by the extension portion 54, and accordingly, the first terminal 12 and the second terminal 32 can be insulated from each other more reliably.

Furthermore, the holder 52 which holds the first dielectric 11 and the second dielectric 31 with the spacer 51 interposed therebetween, and the holding portion 70 which contains and holds at least a portion of the holder 52 are included. Therefore, the distance between the first dielectric 11 and the second dielectric 31 can be kept constant by the spacer 51 and the holder 52, and also the first dielectric 11 and the second dielectric 31 can be held by the holding portion 70.

Furthermore, the first terminal 12 and the second terminal 32 are covered by the thermosetting resin (the resin member 89) provided inside the first notch portions 58. Therefore, the distance between the first dielectric 11 and the second dielectric 31 can be kept constant by the spacer 51 and the holder 52, and insulation between the first terminal 12 and the second terminal 32 can be ensured.

Furthermore, the holder 52 includes the second notch portions 59 which are cut such that the discharge space DS is exposed. Therefore, the holder 52 surrounds the outer circumferences of the first dielectric 11 and the second dielectric 31, but gas can be allowed to enter the discharge space DS via the second notch portions 59. Accordingly, reduction in the amount of the gas entering the discharge space DS due to the provision of the holder can be reduced.

Furthermore, the first partner terminal 71 which is electrically connected to the first terminal 12 and the second partner terminal 72 which is electrically connected to the second terminal 32 are surrounded by the thermosetting resin (the resin member 89). Therefore, the first partner terminal 71 and the second partner terminal 72 can be fixed by the thermosetting resin (the resin member 89) and looseness of the first partner terminal 71 and the second partner terminal 72 can be reduced prevented.

2. Second Embodiment

In a second embodiment, preferable aspects from the viewpoint of inhibiting wear of an electrode in an ozone generating body will be described. In the second embodiment, based on the structure according to the first embodiment, a more detailed structure will be described.

2-1. Structure of Ozone Generator

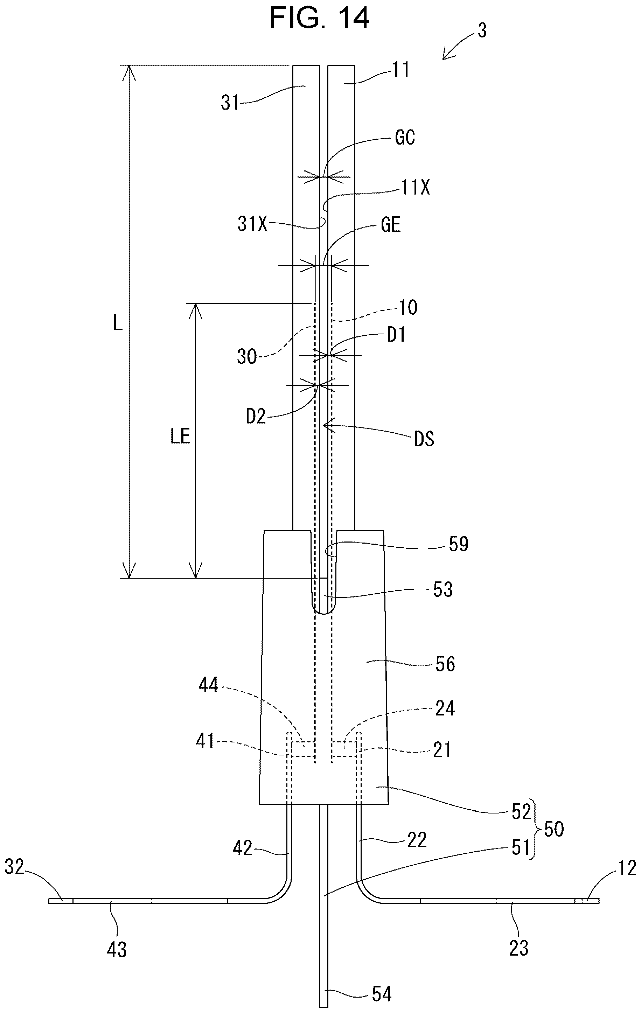

As illustrated in Fig. 14, the first dielectric 11 has a first surface 11X which faces the second dielectric 31. The second dielectric 31 has a second surface 31X which faces the first surface 11X. The discharge space DS is formed between the first surface 11X and the second surface 31X.

The fan 2 illustrated in Fig. 2 and Fig. 3 is disposed upstream of the ozone generating body 3, rotates in a predetermined rotation direction, and thereby generates the swirl flow in the rotation direction in the flow path 1. In the present embodiment, the predetermined rotation direction is a clockwise direction when viewed from the exhaust port 6 (the other end side in the Z-direction). The ozone generating body 3 is disposed on the wall surface 1A side of the flow path 1. The first surface 11X of the first dielectric 11 and the second surface 31X of the second dielectric 31 are inclined in the predetermined rotation direction described above while extending in a downstream direction. Therefore, gas sent from the fan 2 easily enters the discharge space DS formed between the first surface 11X and the second surface 31X. An inclination angle of the first surface 11X and the second surface 31X (the direction of the opening of a gas inlet formed between the first dielectric 11 and the second dielectric 31 through which the gas sent from the fan 2 is introduced) in the rotation direction of the fan 2 with respect to the Z-direction (the central axis of the flow path 1 in a cylindrical shape in which the ozone generating body 3 is disposed) is preferably more than 0° and no more than 80°, more preferably more than 0° and no more than 50°.

2-2. Regarding Dielectric Gap GC and Interelectrode Distance GE

As illustrated in Fig. 14, the dielectric gap GC corresponds to the distance between the first dielectric 11 and the second dielectric 31 (specifically, the distance between the first surface 11X and the second surface 31X). The dielectric gap GC is measured based on the positions of the other ends (ends) of the first electrode 10 and the second electrode 30 in the longitudinal direction. As illustrated in Fig. 14, an interelectrode distance GE corresponds to the distance between the first electrode 10 and the second electrode 30 (specifically, the distance between the other ends (ends) of the first electrode 10 and the second electrode 30 in the longitudinal direction).

When D1 and D2 illustrated in Fig. 14 are constant, the interelectrode distance GE increases as the dielectric gap GC increases, and accordingly, a voltage required for discharge also increases. There is a concern that when the voltage required for discharge increases, the level of an electromagnetic noise caused by discharge may increase, and the size of a transformer for increasing pressure may increase. To solve these problems, it is conceivable to reduce the dielectric gap GC. However, there is a concern that if the dielectric gap GC is reduced, ozone generated in the discharge space DS is less likely to be discharged from the discharge space DS. Here, it is conceivable to facilitate the discharge of the ozone from the discharge space DS by increasing the volume of air sent from the fan 2 to the discharge space DS. In this case, however, other problems may be raised, such as an increase in the level of a noise made by the fan 2 and increase in power consumption of the fan 2. In view of this, the present inventor conducted an experiment to find the appropriate dielectric gap GC and the appropriate interelectrode distance GE.

Experiment conditions will be described below. As for the voltage applied to the ozone generating body 3, the frequency is 20 kHz, a VPP (Voltage peak to peak) is 4.5 kV in the form of a square wave, and a duty (a "ratio of an on-time to the period of the alternating voltage applied to the ozone generating body 3") is 20%. As for the first dielectric 11 and the second dielectric 31, the lengths in the longitudinal direction are 31 mm, the lengths in the transverse direction are 10 mm, and the thicknesses are 1.3 mm. D1 and D2 illustrated in Fig. 14 are 0.15 mm. The materials of the first dielectric 11 and the second dielectric 31 are alumina.

As for the first electrode 10 and the second electrode 30 illustrated in Fig. 14, the lengths LE of portions that generate discharge are 10 mm. The widths WE of the first electrode 10 and the second electrode 30 illustrated in Fig. 6 are 0.6 mm. The materials of the first electrode 10 and the second electrode 30 are tungsten (W). The first electrode 10 and the second electrode 30 are formed in the pattern as illustrated in Fig. 15. As illustrated in Fig. 15, each of the first electrode 10 and the second electrode 30 includes a first linear portion 291, a second linear portion 292, orthogonal portions 293, and intersecting portions 294. The first linear portion 291 and the second linear portion 292 extend along the longitudinal direction and are arranged side by side in the transverse direction. The orthogonal portions 293 extend in a direction perpendicular to the first linear portion 291 and the second linear portion 292 and connect the first linear portion 291 and the second linear portion 292. The multiple orthogonal portions 293 are provided at a regular interval in the longitudinal direction of the first linear portion 291 and the second linear portion 292. The intersecting portions 294 alternately connect intersection points P1 between the first linear portion 291 and the orthogonal portions 293 and intersection points P2 between the second linear portion 292 and the orthogonal portions 293 from the one end side to the other end side in a length direction. A line width for drawing the patterns of the first electrode 10 and the second electrode 30 is 0.1 mm.

The voltage applied to the fan 2 is 24 V in the form of a square wave at 20 kHz, and the duty (a "ratio of the on-time of the PWM signal transmitted to the fan 2") is 30%. The wind speed of the fan 2 is 2.3 m/s.

The ozone generating body 3 was disposed on an experiment flow path having a diameter of 100 mm, not illustrated. An experiment finger guard, not illustrated, was disposed at the exit of the experiment flow path, and the ozone concentration was measured at a position 150 mm away from the center of the experiment finger guard. The ozone concentration was measured by using a measuring device (an ozone analyzer EG-3000F made by EBARA JITSUGYO CO., LTD.).

A noise was measured in a test based on the CISPR14-1 standard.

In the experiment, the ozone concentration was measured when the dielectric gap GC was 0.10 mm, 0.15 mm, 0.20 mm, 0.25 mm, 0.37 mm, 0.50 mm, 0.60 mm, 0.80 mm, or 1.00 mm. In addition, the noise was measured when the interelectrode distance GE was 0.40 mm, 0.45 mm, 0.50 mm, 0.55 mm, 0.67 mm, 0.80 mm, 0.90 mm, 1.10 mm, or 1.30 mm.

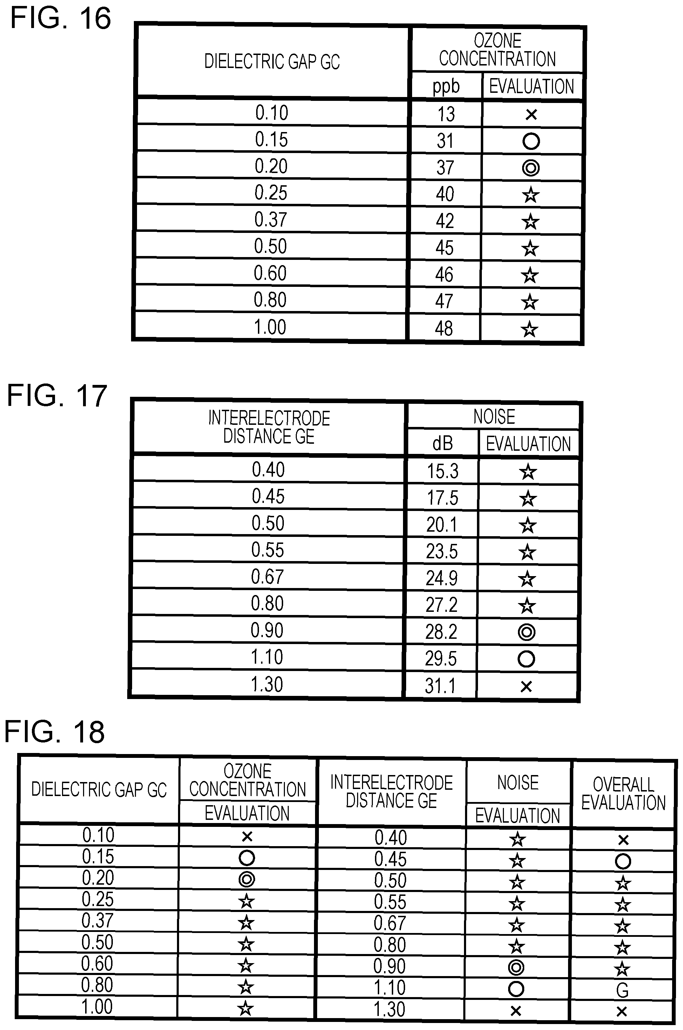

The result of measurement of the ozone concentration is illustrated in Fig. 16. The result of measurement of the noise is illustrated in Fig. 17. The overall evaluation of the ozone concentration and the noise is illustrated in Fig. 18.

The evaluation was made as follows:

<Ozone Concentration (ppb)>
"×" ⋯ less than 30, or 50 or more ("×" for 50 or more in consideration for adverse influence due to a high ozone concentration),
"∘" ⋯ no less than 30 and less than 35,
"◎" ⋯ no less than 35 and less than 40,
"☆" ⋯ no less than 40 and less than 50,
<Noise (dB)>
"×" ⋯ 30 or more,
"∘" ... no less than 29 and less than 30,

"◎" ··· no less than 28 and less than 29,

"☆" ··· less than 28,

<Overall Evaluation>

"×" ··· The evaluation of at least one of the ozone concentration and the noise is "×",

"○" ··· The evaluation of the ozone concentration and the noise is not "×", and the evaluation of at least one of these is "○",

"◎" ··· The evaluation of the ozone concentration and the noise is not "×" or "○", and the evaluation of at least one of these is "◎", and

"☆" ... The evaluation of both of the ozone concentration and the noise is "☆".

As clear from the result of evaluation illustrated in Fig. 16, the dielectric gap GC is preferably 0.15 mm or more, more preferably 0.20 mm or more, and further preferably 0.25 mm or more. This structure makes gas easily enter the discharge space DS and makes gas easily be discharged from the discharge space DS. Therefore, ozone is effectively generated in the discharge space DS, and the generated ozone can be discharged from the discharge space DS.

As clear from the result of evaluation illustrated in Fig. 17, the interelectrode distance GE is preferably 1.1 mm or less, more preferably 0.90 mm or less, and further preferably 0.80 mm or less. With this structure, the dielectric-barrier discharge can be generated in the discharge space DS and ozone can be generated from oxygen while generation of an electromagnetic noise caused by discharge is inhibited.

As clear from the result of the evaluation illustrated in Fig. 18, it is preferable that the dielectric gap GC is 0.15 mm or more and the interelectrode distance GE is 1.1 mm or less, it is more preferable that the dielectric gap GC is 0.20 mm or more and the interelectrode distance GE is 0.90 mm or less, and it is further preferable that the dielectric gap GC is 0.25 mm or more and the interelectrode distance GE is 0.80 mm or less. With this structure, generation of an electromagnetic noise caused by discharge can be inhibited, ozone can be efficiently generated, and the generated ozone can be discharged from the discharge space DS.

2-3. Effects according to Second Embodiment

The ozone generating body 3 according to the second embodiment includes the first electrode 10, the first dielectric 11 which covers the first electrode 10, the second electrode 30, and the second dielectric 31 which covers the second electrode 30. The ozone generating body 3 generates the dielectric-barrier discharge in the discharge space DS formed between the first dielectric 11 and the second dielectric 31. Therefore, ozone can be generated from oxygen in the discharge space DS. In addition, since the first electrode 10 is covered by the first dielectric 11 and the second electrode 30 is covered by the second dielectric 31, wear of the first electrode 10 and the second electrode 30 due to oxidation can be inhibited.

Furthermore, the ozone generating body 3 includes the support portion 50 which supports the first dielectric 11 and the second dielectric 31 at one end side of the first dielectric 11 and the second dielectric 31 in the longitudinal direction. Consequently, the first dielectric 11 and the second dielectric 31 are supported at the ends on the same side, and accordingly, a portion between the first dielectric 11 and the second dielectric 31 at the other end side in the longitudinal direction can be opened. Therefore, gas easily enters the discharge space DS formed between the first dielectric 11 and the second dielectric 31, and consequently, the efficiency of generation of ozone can be improved.

Furthermore, the ozone generator 100 according to the first embodiment includes the flow path 1 for gas, the fan 2 which sends the gas from the intake ports 5 side to the exhaust port 6 side of the flow path 1, and the ozone generating body 3. The fan 2 is disposed upstream of the ozone generating body 3, rotates in the predetermined rotation direction, and thereby generates the swirl flow in the rotation direction in the flow path 1. The ozone generating body 3 is disposed on the wall surface 1A side of the flow path 1. The first surface 11X and the second surface 31X are arranged so as to be inclined in the rotation direction while extending in the downstream direction. Consequently, gas sent from the fan 2 easily enter the discharge space DS formed between the first surface 11X and the second surface 31X, and accordingly, the efficiency of generation of ozone of the ozone generating body 3 can be improved. Furthermore, since the first surface 11X and the second surface 31X are inclined while extending in the downstream direction, ultraviolet rays that are generated due to the dielectric-barrier discharge can be inhibited from hitting the eyes of a person who looks the inside of the flow path 1 from the exhaust port 6 side.

3. Third Embodiment

In a third embodiment, preferable aspects from the viewpoint of making air easily enter a space between electrodes will be described. In the third embodiment, based on the structure according to the first embodiment, a more detailed structure will be described.

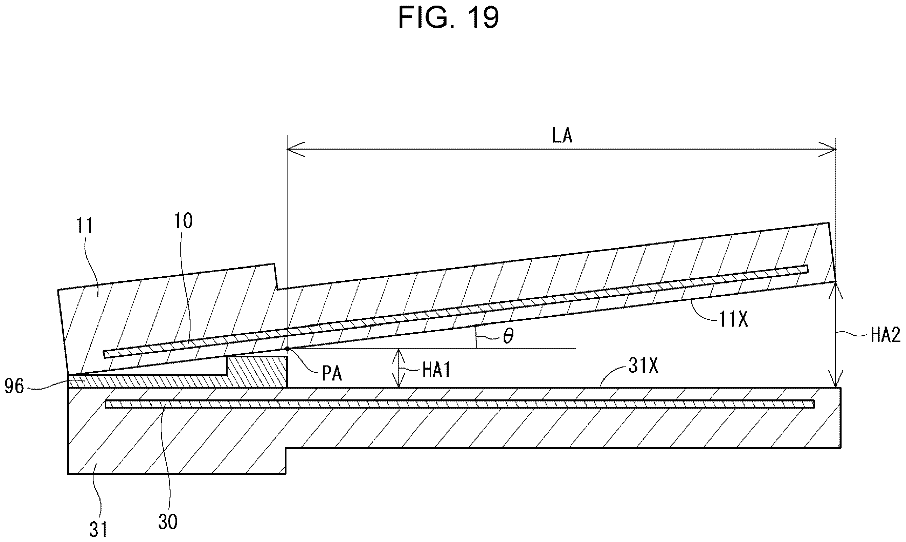

As illustrated in Fig. 19, the first dielectric 11 has the first surface 11X which faces the second dielectric 31.

The second dielectric 31 has the second surface 31X which faces the first surface 11X. The discharge space DS is formed between the first surface 11X and the second surface 31X.

An inclination angle θ is an angle at which the first surface 11X is inclined with respect to the second surface 31X when viewed in the transverse direction. At the other end side in the longitudinal direction, a direction in which the first surface 11X is separated from the second surface 31X is a positive direction and a direction in which the first surface 11X approaches the second surface 31X is a negative direction. That is, in the case where the first surface 11X and the second surface 31X are parallel with each other, the inclination angle θ is 0°. In the case where the distance between the first surface 11X and the second surface 31X widens from one end side to the other end side in the longitudinal direction, the inclination angle θ is positive, and in the case where the distance between the first surface 11X and the second surface 31X narrows from one end side to the other end side in the longitudinal direction, the inclination angle θ is negative.

Reducing the inclination angle θ enables the voltage required for discharge to be reduced, and accordingly, generation of an electromagnetic noise caused by discharge can be inhibited. However, there is a concern that gas is less likely to enter between the first surface 11X and the second surface 31X, and the ozone generated in the discharge space DS is less likely to be discharged from the discharge space DS. In contrast, increasing the inclination angle θ makes gas easily enter between the first surface 11X and the second surface 31X, but the voltage required for discharge increases assuming that D1 and D2 illustrated in Fig. 5 are constant. When the voltage required for discharge increases, there is a concern that the level of an electromagnetic noise caused by discharge may increase, and the size of a transformer for increasing pressure may increase. In view of this, the inventor conducted an experiment to find the appropriate inclination angle θ from the viewpoint of discharging the ozone generated in the discharge space DS and from the viewpoint of reducing the electromagnetic noise caused by discharge.

Experiment conditions will be described below. As for the voltage applied to the ozone generating body 3, the frequency is 20 kHz, the VPP (Voltage peak to peak) is 4.5 kV in the form of a square wave, and the duty (the "ratio of the on-time to the period of the alternating voltage applied to the ozone generating body 3") is 20%. As for the first dielectric 11 and the second dielectric 31, the lengths in the longitudinal direction are 31 mm, the lengths in the transverse direction are 10 mm, and the thicknesses are 1.3 mm. D1 and D2 illustrated in Fig. 5 are 0.15 mm. The materials of the first dielectric 11 and the second dielectric 31 are alumina.

As for the first electrode 10 and the second electrode 30, the lengths LE (see Fig. 5) of the portions that generate discharge are 20 mm in the case where the inclination angle θ is 0°. The widths WE (see Fig. 6) of the first electrode 10 and the second electrode 30 are 0.6 mm. The materials of the first electrode 10 and the second electrode 30 are tungsten (W). The first electrode 10 and the second electrode 30 are formed in the pattern as illustrated in Fig. 15 described in the second embodiment.

The voltage applied to the fan 2 is 24 V in the form of a square wave at 20 kHz, and the duty (the "ratio of the on-time of the PWM signal transmitted to the fan 2") is 30%. The wind speed of the fan 2 is 2.3 m/s.

The ozone generating body 3 was disposed on an experiment flow path having a diameter of 100 mm, not illustrated. An experiment finger guard, not illustrated, was disposed at the exit of the experiment flow path, and the ozone concentration was measured at a position 150 mm away from the center of the experiment finger guard. The ozone concentration was measured by using a measuring device (an ozone analyzer EG-3000F made by EBARA JITSUGYO

CO., LTD.)

The noise was measured in a test based on the CISPR14-1 standard.

In the experiment, the ozone concentration and the noise were measured when tan θ × 100 is -1.8 [%], -1.0 [%], -0.5 [%], 0.0 [%], 0.5 [%], 1.0 [%], 3.0 [%], or 3.6 [%].

As illustrated in Fig. 19, the inclination angle θ was adjusted in a manner in which an adjustment member 96 was disposed between the first dielectric 11 and the second dielectric 31. The thickness of the adjustment member 96 at the other end side in the longitudinal direction was constantly 0.37 mm, and the thickness at one end side was changed. Specifically, the height of a surface of the adjustment member 96 facing the first dielectric 11 was adjusted, whereby the thickness of the adjustment member 96 at one end side was adjusted. The first dielectric 11 was disposed so as to be inclined due to a step formed on the adjustment member 96 and held in the inclined state. Consequently, the first surface 11X was made in the inclined state with respect to the second surface 31X.

The value of tan θ was obtained by using an arithmetic expression of (HA2 - HA1) / LA. HA1 is the minimum distance from an intersection point PA to the second surface 31X, PA being an intersection point of the first surface 11X and a line that passes through the other end of the adjustment member 96 in the longitudinal direction and that is perpendicular to the second surface 31X. HA2 is the minimum distance from the other end of the first surface 11X in the longitudinal direction to the second surface 31X. LA is a distance from the intersection point PA to the other end of the first surface 11X in the longitudinal direction of the second surface 31X.

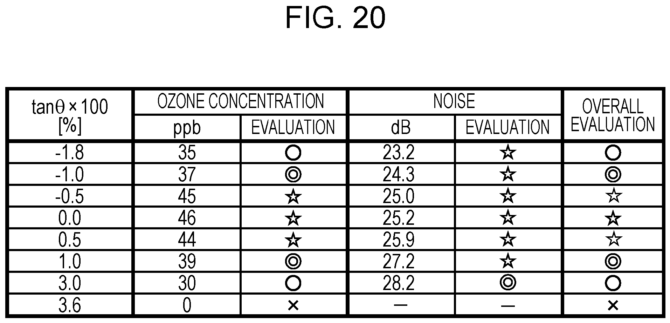

The result of measurement of the ozone concentration and the noise is illustrated in Fig. 20.

The evaluation was made as follows:

<Ozone Concentration (ppb)>
"×" ⋯ less than 30, or 50 or more ("×" for 50 or more in consideration for adverse influence due to a high ozone concentration),

"∘" ⋯ no less than 30 and no more than 35,

"◎" ⋯ more than 35 and less than 40,

"☆" ⋯ no less than 40 and less than 50,

<Noise (dB)>
"×" ⋯ 30 or more,

"∘" ... no less than 29 and less than 30,

"◎" ⋯ no less than 28 and less than 29,

"☆" ⋯ less than 28,

<Overall Evaluation>
"×" ⋯ The evaluation of at least one of the ozone concentration or the noise is "×",

"∘" ⋯ The evaluation of the ozone concentration and the noise is not "×", and the evaluation of at least one of these is "∘",

"◎" ⋯ The evaluation of the ozone concentration and the noise is not "×" or "∘", and the evaluation of at least one of these is "◎", and

"☆" ... The evaluation of both of the ozone concentration and the noise is "☆".

As clear from the result of evaluation illustrated in Fig. 20, tan $\theta \times 100$ is preferably no less than -1.8 [%] and no more than 3.0 [%], from the viewpoint of generating the dielectric-barrier discharge while generation of an electromagnetic noise caused by discharge is inhibited, and inhibiting gas from being less likely to enter the discharge space DS and inhibiting the ozone generated in the discharge space DS from being less likely to be discharged.

In particular, tan $\theta \times 100$ is more preferably -1.0 [%] or more, and further preferably -0.5 [%] or more, from the viewpoint of inhibiting gas from being less likely to enter the discharge space DS, and inhibiting the ozone generated in the discharge space DS from being less likely to be discharged, more reliably.

In addition, tan $\theta \times 100$ is more preferably 1.0 [%] or less, and further preferably 0.5 [%] or less, from the viewpoint of inhibiting generation of an electromagnetic noise caused by discharge more reliably.

In addition, tan $\theta \times 100$ is preferably no less than - 1.8 [%] and less than 0.0 [%], more preferably no less than -1.0 [%] and less than 0.0 [%], and further preferably no less than -0.5 [%] and less than 0.0 [%], from the viewpoint of inhibiting gas from being less likely to enter the discharge space DS and inhibiting the ozone generated in the discharge space DS from being less likely to be discharged, while attaching importance of inhibiting generation of an electromagnetic noise caused by discharge.

In addition, tan $\theta \times 100$ is preferably more than 0.0 [%] and no more than 3.0 [%], more preferably more than 0.0 [%] and no more than 1.0 [%], and further preferably more than 0.0 [%] and no more than 0.5 [%], from the viewpoint of inhibiting generation of an electromagnetic noise caused by discharge, while attaching importance of making gas easily enter the discharge space DS and making the ozone generated in the discharge space DS be easily discharged.

4. Fourth Embodiment

In a fourth embodiment, preferable aspects from the viewpoint of dispersing the ozone concentration near the exhaust port of the flow path will be described. In the fourth embodiment, based on the structure according to the first embodiment, a more detailed structure will be described.

4-1. Detail regarding Diffuser Panel

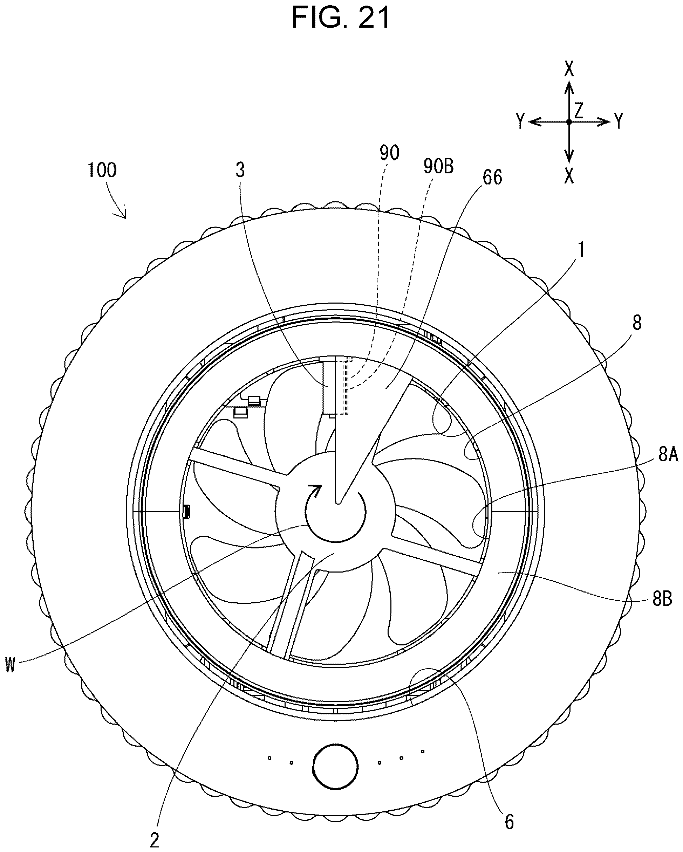

The material of the diffuser panel 66 preferably has resistance to ozone and is, for example, ABS resin. As illustrated in Fig. 21, the diffuser panel 66 is disposed at the position covering an opening 90 formed between the first dielectric 11 and the second dielectric 31 when viewed from the exhaust port 6 side.

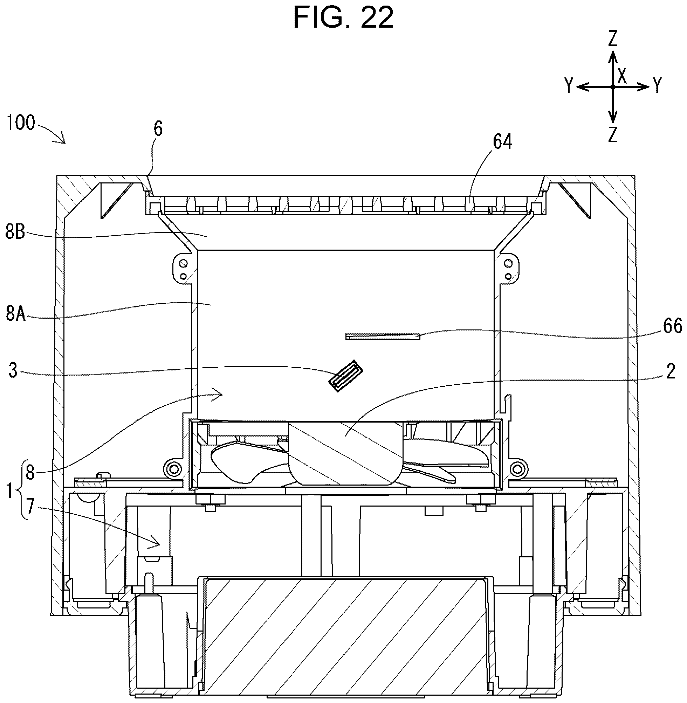

The second flow path 8 described above corresponds to an example of a "linear flow path" and linearly extends from the exhaust port 6 toward an upstream side as illustrated in Fig. 22. The second flow path 8 cylindrically extends in the Z-direction. The ozone generating body 3 is provided in the second flow path 8.

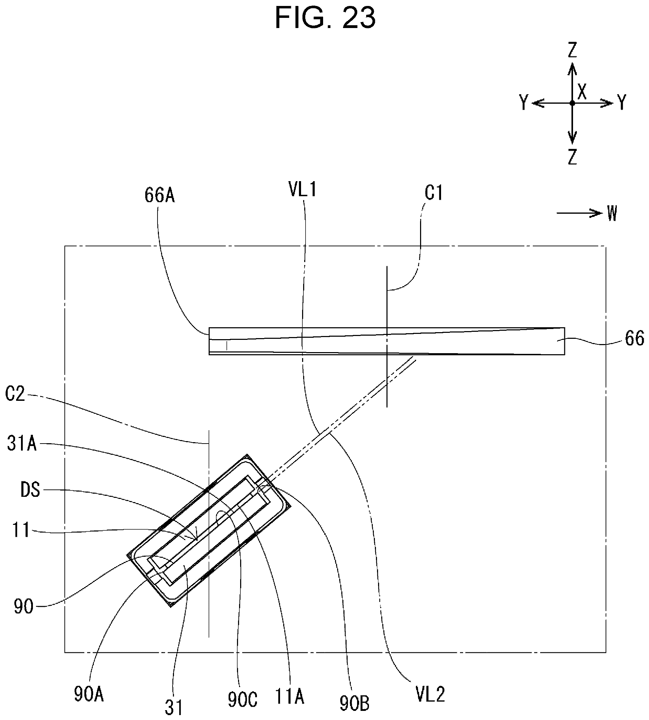

As illustrated in Fig. 23, the first dielectric 11 has the first surface 11X which faces the second dielectric 31 and defines the discharge space DS between the first surface 11X and the second dielectric 31. The second dielectric 31 has the second surface 31X which faces the first surface 11X and defines the discharge space DS between the second surface 31X and the first surface 11X. The first surface 11X and the second surface 31X are arranged so as to be inclined with respect to an extending direction of the second flow path 8. The first surface 11X and the second surface 31X have the same size and the same shape, specifically, a rectangular shape. The opening 90 is formed between the first surface 11X and the second surface 31X.

The opening 90 includes a first opening 90A, a second opening 90B, and a third opening 90C. The first opening 90A is formed between an upstream end portion of the first surface 11X and an upstream end portion of the second surface 31X. The second opening 90B is formed between a downstream end portion of the first surface 11X and a downstream end portion of the second surface 31X. The third opening 90C is formed between the other end portion of the first surface 11X in the longitudinal direction and the other end portion of the second surface 31X in the longitudinal direction.

As illustrated in Fig. 21, the first opening 90A and the third opening 90C are arranged at angles so as to be invisible when viewed from the exhaust port 6 side in the Z-direction even though the first opening 90A and the third opening 90C are not covered by the diffuser panel 66. The second opening 90B is opened toward the exhaust port 6. That is, only the second opening 90B of the opening 90 is opened toward the exhaust port 6. As illustrated in Fig. 21, the diffuser panel 66 is disposed at the position covering the second opening 90B when viewed from the exhaust port 6 side in the Z-direction. That is, the diffuser panel 66 is disposed at the position covering the second opening 90B which is formed between the first surface 11X and the second surface 31X and opened toward the exhaust port 6, when viewed from the exhaust port 6 side in the Z-direction.

As illustrated in Fig. 21, the diffuser panel 66 projects inward from a portion of the wall surface 1A of the flow path 1 in the circumferential direction toward the center, and the width thereof in the circumferential direction decreases as being farther away from the wall surface 1A. The angle of an end of the diffuser panel 66 when viewed in the Z-direction is, for example, no less than 15° and no more than 45°, and is 30° in the example illustrated in Fig. 21.

The fan 2 rotates in a rotation direction W illustrated in Fig. 21 and thereby generates the swirl flow in the rotation direction W in the flow path 1. As illustrated in Fig. 22 and Fig. 23, the first surface 11X and the second surface 31X are inclined in the rotation direction W while extending toward the exhaust port 6 (the downstream side). As illustrated in Fig. 14, when viewed in an X-direction which is perpendicular to the extending direction of the second flow path 8 (the Z-direction), the diffuser panel 66 is disposed on a first imaginary line VL1 which imaginarily extends from the first surface 11X and is disposed on a second imaginary line VL2 which imaginarily extends from the second surface 31X. According to the present embodiment, the X-direction is the same as the longitudinal direction of the first dielectric 11 and the second dielectric 31, and is the same as the projecting direction of the first dielectric 11 and the second dielectric 31.

As illustrated in Fig. 23, when viewed in the X-direction, the diffuser panel 66 is disposed such that the center C1 of the diffuser panel 66 in the Y-direction, which is perpendicular to the extending direction of the second flow path 8 and the X-direction, is away from the center C2 of the ozone generating body 3 to the rotation direction W. In addition, when viewed in the X-direction, the diffuser panel 66 is disposed such that a rear end 66A of the diffuser panel 66 in the rotation direction W matches the center C2 of the ozone generating body 3 with respect to the Y-direction.

As illustrated in Fig. 22, in the downstream of the diffuser panel 66, the second flow path 8 has a tapered surface 8B which is inclined such that a sectional area of the flow path 1 increases toward the downstream side. Specifically, the second flow path 8 has a cylindrical surface 8A and the tapered surface 8B which is continuous with a downstream end portion of the cylindrical surface 8A. The diameter of the cylindrical surface 8A is constant in the extending direction of the second flow path 8. The diameter of the tapered surface 8B gradually increases toward the exhaust port 6 side.

As illustrated in Fig. 3, the diffuser panel 66 projects inward from the portion of the wall surface 1A of the flow path 1 in the circumferential direction, and the thickness thereof gradually decreases as being farther away from the wall surface 1A. That is, the diffuser panel 66 projects from the wall surface 1A toward the center, and the thickness gradually decreases toward the distal end thereof. For example, the thickness of the diffuser panel 66 is set in a range of 2 mm or more and 3 mm or less at a position on the wall surface 1A side and is set about 1 mm at a position on the distal end side (the side near the center).

4-2. Effects according to Fourth Embodiment

The diffuser panel 66 is disposed downstream of the ozone generating body 3 in the flow path 1. Consequently, the ozone generated by the ozone generating body 3 is diffused by the diffuser panel 66 disposed downstream thereof, and accordingly, the ozone concentration near the exhaust port 6 of the flow path 1 can be dispersed.

Furthermore, the diffuser panel 66 is disposed at the position covering the opening 90 formed between the first dielectric 11 and the second dielectric 31 when viewed from the exhaust port 6. Consequently, the opening 90 is covered by the diffuser panel 66, and accordingly, the ultraviolet rays of the dielectric-barrier discharge generated in the discharge space DS can be inhibited from hitting the eyes of a person who looks from the exhaust port 6 side.

Furthermore, the first surface 11X and the second surface 31X which face each other are arranged so as to be inclined with respect to the extending direction of the second flow path 8. Thus, since the first surface 11X and the second surface 31X which face each other are arranged so as to be inclined with respect to the extending direction of the second flow path 8, ultraviolet rays of the dielectric-barrier discharge generated in the discharge space DS can be inhibited from hitting the eyes of a person who looks from the exhaust port 6 side.

Furthermore, the fan 2 generates the swirl flow in the flow path 1. The diffuser panel 66 projects inward from the portion of the wall surface 1A of the flow path 1 in the circumferential direction, and the width thereof in the circumferential direction decreases in the direction away from the wall surface 1A. The speed of gas in the swirl flow is faster as being farther away from the rotation axis of the swirl flow, and is slower as being closer to the rotation axis of the swirl flow. With this structure, the gas can be diffused in a wide range at positions far from the rotation axis where the movement speed of the gas is fast, and the gas can be diffused in a narrow range at positions near the rotation axis where the movement speed of the gas is slow. Accordingly, pressure loss due to the diffuser panel 66 is reduced, and ozone in the gas can be diffused in a well-balanced manner.

Furthermore, the fan 2 rotates in the rotation direction W and thereby generates the swirl flow in the rotation direction W in the flow path 1. The ozone generating body 3 is disposed on the wall surface 1A side of the flow path 1. The first surface 11X and the second surface 31X are inclined in the rotation direction W while extending in the direction toward the exhaust port 6. When viewed in the X-direction, the diffuser panel 66 is disposed on the first imaginary line VL1 which imaginarily extends from the first surface 11X and is disposed on the second imaginary line VL2 which imaginarily extends from the second surface 31X. With this structure, the gas sent from the fan 2 can be made to smoothly flow into the discharge space DS, ozone can be generated in the discharge space DS, and the gas containing ozone that is discharged from the discharge space DS can be diffused by the diffuser panel 66 more reliably.

Furthermore, the diffuser panel 66 projects from the portion of the wall surface 1A of the flow path 1 in the circumferential direction, and when viewed in the X-direction, the diffuser panel 66 is disposed such that the center C1 of the diffuser panel 66 in the Y-direction is away from the center C2 of the ozone generating body 3 to the rotation direction W. Therefore, the ozone generated by the ozone generating body 3 can be diffused to both sides of the diffuser panel 66 in a well-balanced manner.

Furthermore, when viewed in the X-direction, the diffuser panel 66 is disposed such that the rear end 66A of the diffuser panel 66 in the rotation direction W matches the center C2 of the ozone generating body 3 with respect to the Y-direction. Therefore, while reducing the pressure loss due to the diffuser panel 66, the ozone generated by the ozone generating body 3 can be diffused to both sides of the diffuser panel 66 in a well-balanced manner.

Furthermore, the ozone generator 100 includes the finger guard 64 provided downstream of the diffuser panel 66 and having multiple holes. Therefore, while allowing gas to be discharged, foreign substances from the outside can be prevented from entering the upstream side of the finger guard 64.

Furthermore, in the downstream of the diffuser panel 66, the flow path 1 has the tapered surface 8B which is inclined such that the sectional area of the flow path 1 increases toward the downstream side. Therefore, the ozone diffused by the diffuser panel 66 can be further diffused by the tapered surface 8B.

Furthermore, the diffuser panel 66 projects inward from the portion of the wall surface 1A of the flow path 1 in the circumferential direction, and the thickness thereof decreases as being away from the wall surface 1A. Therefore, diffusion of the ozone generated by the ozone generating body 3 and reduction in the pressure loss due to the diffuser panel 66 can be achieved in a well-balanced manner.

Furthermore, the ozone generating body 3 is disposed to be closer to the wall surface 1A side rather than the center of the flow path 1. Thus, since the ozone generating body 3 can be disposed to be closer to the wall surface 1A side, the degree of freedom of design is increased. In addition, even when the ozone generating body 3 is disposed to be closer to the wall surface 1A side, ozone concentration distribution can be easily dispersed with the structure described above.

5. Fifth Embodiment

In a fifth embodiment, preferable aspects from the viewpoint of improving the efficiency of generation of ozone will be described. The fifth embodiment differs from the first embodiment in that the diffuser panel is not included. Other components are the same as those in the first embodiment, and a detailed description is omitted.

5-1. Structure of Ozone Generator

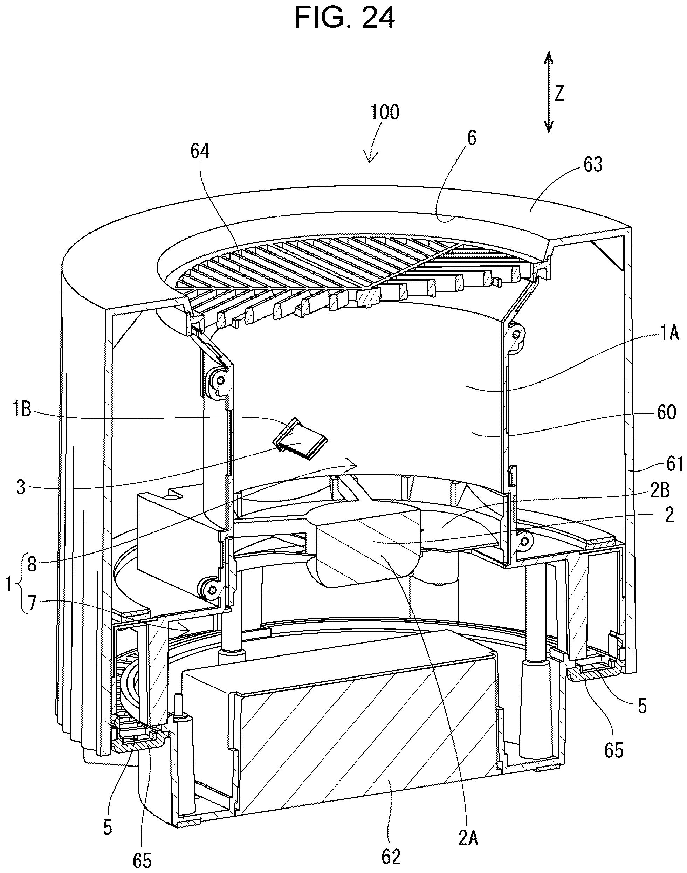

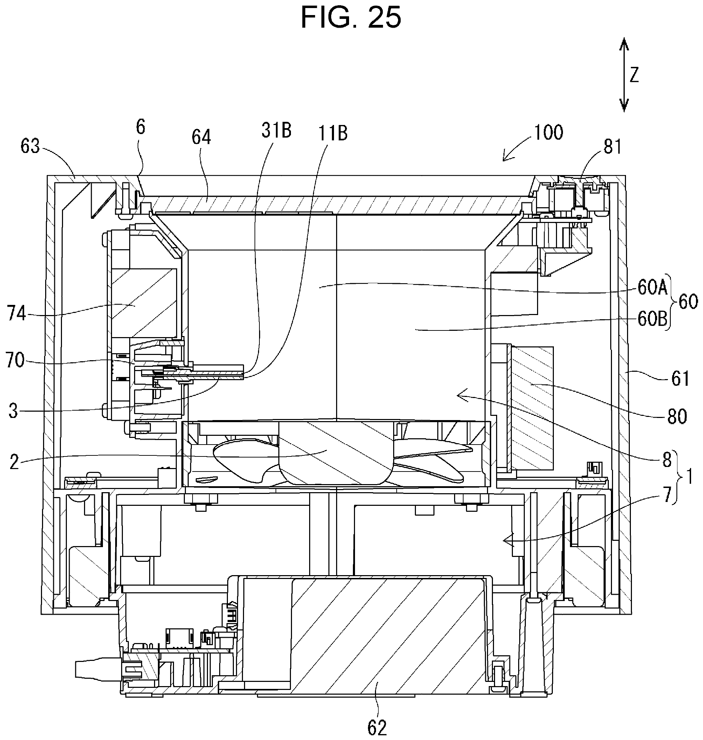

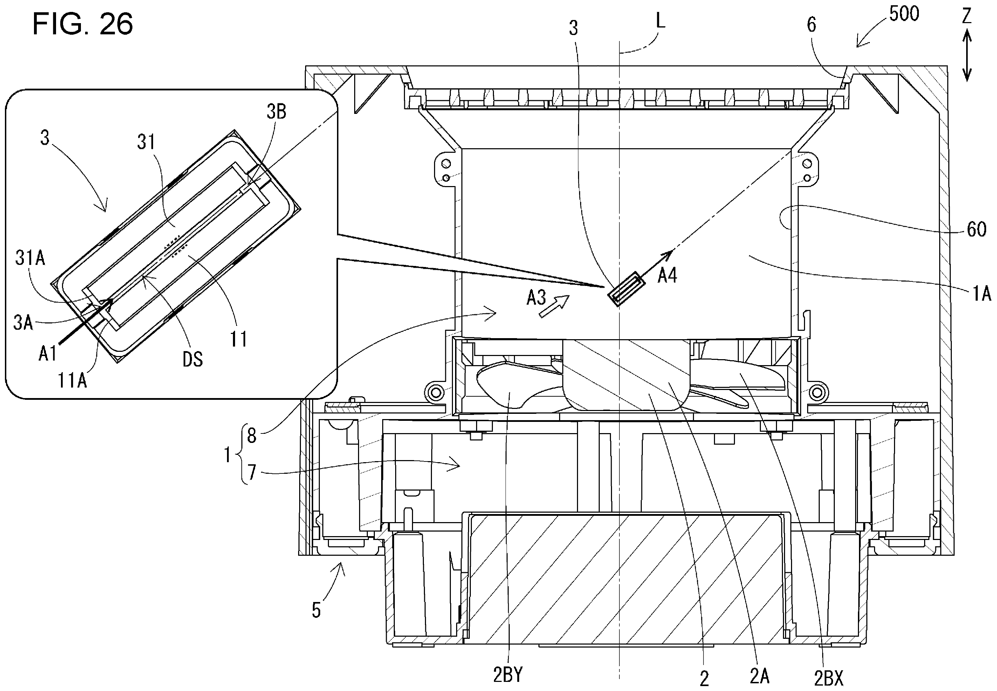

Fig. 24 and Fig. 25 illustrate an ozone generator 500 according to the fifth embodiment. The fan 2 is a device that generates airflow (specifically, swirl flow) in the flow path 1 and is an axial fan in the present embodiment. The fan 2 generates the swirl flow about a central axis L (see Fig. 26) in the flow path 1. The fan 2 performs an air sending operation of sending gas from the intake ports 5 side to the exhaust port 6 side of the flow path. The fan 2 includes a rotor 2A, multiple blade portions 2B projecting from the rotor 2A in radial directions, and a motor (not illustrated). The motor is driven when power is supplied, whereby the fan 2 performs the air sending operation. The fan 2 is provided in the flow path 1 (specifically, the second flow path 8). The fan 2 is disposed with the central axis L of the fan 2 (see Fig. 26) extending in the Z-direction. The fan 2 rotates about the Z-direction. Specifically, the fan 2 rotates in the clockwise direction when viewed from the other end side in the axial direction (the upper end side in Fig. 26).

As illustrated in Fig. 26, the first dielectric 11 is nearer to the fan 2 than the second dielectric 31 in the flow path component 60. The ozone generating body 3 has a gas inlet 3A. The gas inlet 3A is an opening portion through which gas (air containing oxygen) enters the discharge space DS. The gas inlet 3A forms a portion of the discharge space DS. The gas inlet 3A is constituted by including an end portion 11A of the first dielectric 11 (an end portion that differs from one end and the other end) and an end portion 31A of the second dielectric 31 which faces the end portion 11A of the first dielectric 11. The end portion 11A of the first dielectric 11 and the end portion 31A of the second dielectric 31 differ from both ends in the longitudinal direction, and are ends in a direction perpendicular to the longitudinal direction and the direction of arrangement. The gas inlet 3A extends in the extending direction (the longitudinal direction) of the first electrode 10 and the second electrode 30. In the first dielectric 11 and the second dielectric 31, the gas inlet 3A is provided mainly at portions nearer to the other end side than the spacer 51 (more specifically, the spacer portion 53).

As illustrated in Fig. 26, a direction in which gas enters from the gas inlet 3A (hereinafter, also referred to as an opening direction) is inclined in the rotation direction of the fan 2 with respect to the central axis L. The "opening direction" is a direction perpendicular to the extending direction (the longitudinal direction) of the first electrode 10 and the second electrode 30 and the direction of arrangement of the first dielectric 11 and the second dielectric 31. The opening direction is a direction perpendicular to a region that is interposed between the end portion 11A of the first dielectric 11 and the end portion 31A of the second dielectric 31. The opening direction extends along a gap between the first dielectric 11 and the second dielectric 31 (the discharge space DS). As illustrated in Fig. 26, the opening direction is, for example, a direction toward an upper right side (the direction of an arrow A1 in Fig. 26) in a section viewed in the extending direction (the longitudinal direction) of the first electrode 10 and the second electrode 30 (a section on which the central axis L of the fan 2 and the ozone generating body 3 overlap). The "rotation direction of the fan 2" is the clockwise direction when viewed from the other end side in the axial direction (in Fig. 26, the upper end side). For example, in a section illustrated in Fig. 26, the "rotation direction of the fan 2" is a direction in which a right-hand blade portion (referred to as a blade portion 2BX) rotates in a direction toward the front of the paper and a left-hand blade portion (referred to as a blade portion 2BY) rotates in a direction toward the back of the paper.

The swirl flow that is generated by the fan 2 is a flow rotating clockwise when viewed from the other end side in the Z-direction (the upper side). For example, in the section illustrated in Fig. 26, airflow in a direction toward an upper right side is generated in the flow path 1 as illustrated by an arrow A3. Thus, the opening direction of the gas inlet 3A is inclined in the rotation direction of the fan 2 with respect to the central axis L, and consequently, the direction of the swirl flow and the opening direction of the gas inlet 3A are likely to overlap. Accordingly, gas is easily introduced into the discharge space DS from the gas inlet 3A, and the efficiency of ozone generation by the ozone generating body 3 can be improved.

For example, the inclination angle of the opening direction of the gas inlet 3A in the rotation direction of the fan 2 with respect to the central axis L (also referred to simply as the inclination angle) is preferably more than 0° and no more than 80°. For example, the inclination angle of the opening direction of the gas inlet 3A is preferably 50° or less.

As illustrated in Fig. 25, the whole of the first dielectric 11 including the other end in the longitudinal direction (hereinafter, referred to as the other end 11B) and the whole of the second dielectric 31 including the other end in the longitudinal direction (hereinafter, referred to as the other end 31B) are located outside the rotor 2A in the radial direction when viewed in the Z-direction (the up-down direction). "The first dielectric 11 and the second dielectric 31 being located outside the rotor 2A in the radial direction" means that the whole of the first dielectric 11 including the other end of the first dielectric 11 in the longitudinal direction and the whole of the second dielectric 31 including the other end of the second dielectric 31 in the longitudinal direction do not extend beyond (extend across) the rotor 2A when viewed in the Z-direction (the up-down direction). That is, the first dielectric 11 and the second dielectric 31 do not overlap the rotor 2A of the fan 2 in the Z-direction (the up-down direction). The first dielectric 11 and the second dielectric 31 are located at a position overlapping a blade portion 2B of the fan 2 in the Z-direction (the up-down direction). Therefore, the gas inlet 3A in its entirety can be inclined in the rotation direction of the fan 2 with respect to the central axis L, so that the swirl flow can be made to easily enter the gas inlet 3A. Furthermore, the swirl flow becomes faster as being farther away from the central axis L, and accordingly, the swirl flow easily enters the gas inlet 3A which is located near the wall surface 1A. Furthermore, since the discharge space DS is located near the wall surface 1A, the generation of ozone can be performed efficiently by the swirl flow having entered from the gas inlet 3A.

As illustrated in Fig. 26, the ozone generating body 3 has a gas outlet 3B. The gas outlet 3B discharges the gas that is introduced from the gas inlet 3A. The gas outlet 3B forms a portion of the discharge space DS. The gas outlet 3B is provided on the opposite side to the gas inlet 3A. The gas outlet 3B has the same structure as the gas inlet 3A. The gas outlet 3B is constituted by including an end portion 11C (an end portion on the opposite side to the end portion 11A) of the first dielectric 11 and an end portion 31C of the second dielectric 31 which faces the end portion 11A of the first dielectric 11. As illustrated in Fig. 26, the flow path component 60 is located at a position in the direction in which gas exits from the gas outlet 3B (also referred to as a discharge direction). In the present embodiment, the "discharge direction" is the same as the opening direction of the gas inlet 3A. The discharge direction is a direction perpendicular to a region that is interposed between the end portion 11C of the first dielectric 11 and the end portion 31C of the second dielectric 31. The discharge direction is, for example, a direction toward an upper right side in the section illustrated in Fig. 26 (the direction of an arrow A4 in Fig. 26). As illustrated in Fig. 26, the flow path component 60 is located at the position in the discharge direction of the gas outlet 3B (on a straight line that extends from the gas outlet 3B), and accordingly, the gas outlet 3B is less likely to be visually recognized from the exhaust port 6 side. Therefore, the discharge space DS is less likely to be visually recognized through the gas outlet 3B, and ultraviolet rays that are generated during discharge can be inhibited from being directly seen.

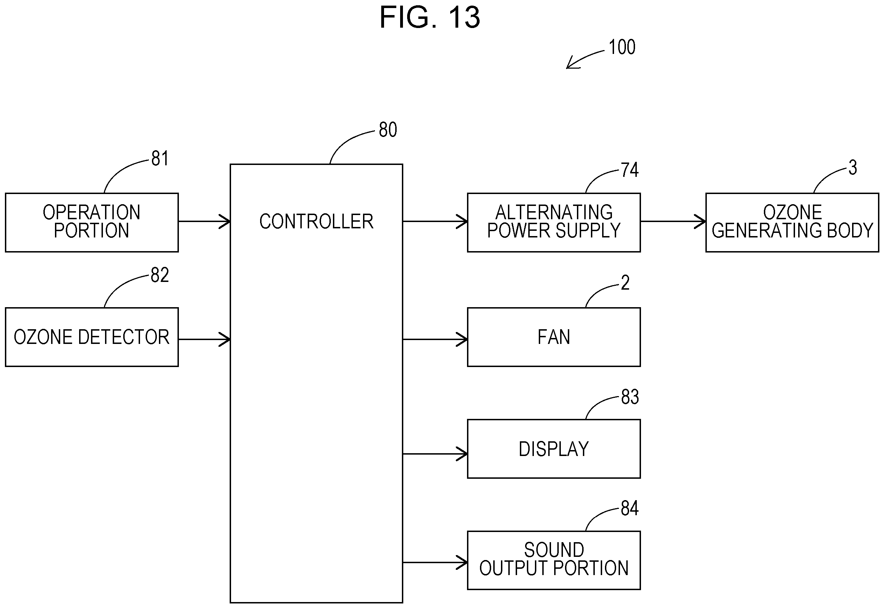

As illustrated in Fig. 13 described in the first embodiment, the ozone generator 500 includes the controller 80, the operation portion 81, the ozone detector 82, the display 83, and the sound output portion 84. The controller 80 controls the operation of the ozone generator 500. The controller 80 is configured mainly by a microcomputer, and includes, for example, a CPU, a ROM, a RAM, and a drive circuit.

The operation portion 81 is, for example, a switch that switches between an on-state and an off-state by being pressed, such as a tactile switch. The signal representing the result of the operation of the operation portion 81 is inputted into the controller 80. The ozone detector 82 detects the ozone concentration in air outside the ozone generator 500. The signal representing the detection value of the ozone detector 82 is inputted into the controller 80.

The controller 80 can control the operation of the ozone generating body 3 via the alternating power supply 74. The controller 80 controls the alternating voltage to be applied to the ozone generating body 3, and can consequently adjust the amount of the ozone generated by the ozone generating body 3. The controller 80 can adjust the amount of the ozone to be generated, based on the result of the operation of the operation portion 81. The controller 80 can implement the feedback control on the operation of the ozone generating body 3 based on the ozone concentration detected by the ozone detector 82 such that the ozone concentration approaches a target value.

The controller 80 can control the operation of the fan 2. The controller 80 supplies a PWM signal to the fan 2 and consequently controls the fan 2 under PWM control. Thus, the controller 80 can adjust air volume.

The controller 80 can control the operation of the display 83. The display 83 is, for example, a LED lamp. The display 83 indicates, for example, an on/off state of the power supply, an operation state of the fan 2, and an ozone concentration in the outside, by the lightning state of the LED.

The controller 80 can control the operation of the sound output portion 84. The sound output portion 84 outputs a sound, and is, for example, a buzzer. For example, the sound output portion 84 outputs a warning sound in a case where the ozone generator 500 malfunctions.

5-2. Effects according to Fifth Embodiment

According to the fifth embodiment, the direction in which gas enters from the gas inlet 3A (the opening direction) is inclined in the rotation direction of the fan 2 with respect to the central axis L, and accordingly, the gas is easily introduced into the discharge space DS from the gas inlet 3A. Therefore, the efficiency of generation of ozone of the ozone generator 500 is improved.

Furthermore, the first dielectric 11 and the second dielectric 31 are located outside the rotor 2A in the radial direction. Therefore, the gas inlet 3A in its entirety can be inclined in the rotation direction of the fan 2 with respect to the central axis L, so that the swirl flow can be made to easily enter the gas inlet 3A.

Furthermore, the flow path component 60 is located at the position in the direction in which gas exits from the gas outlet 3B (the discharge direction). Therefore, the discharge space DS is less likely to be visually recognized through the gas outlet 3B from the exhaust port 6 side of the flow path 1, and ultraviolet rays can be inhibited from being directly seen.

Furthermore, a straight line X that passes through a first edge portion 10A of the first electrode 10 and a second edge portion 31D of the second dielectric 31 and that extends toward the gas outlet 3B intersects with the flow path component 60. Therefore, the vicinity of the first electrode 10 is less likely to be visually recognized through the gas outlet 3B from the exhaust port 6 side of the flow path 1, and ultraviolet rays that are generated near the first electrode 10 can be inhibited from being directly seen.

6. Sixth Embodiment

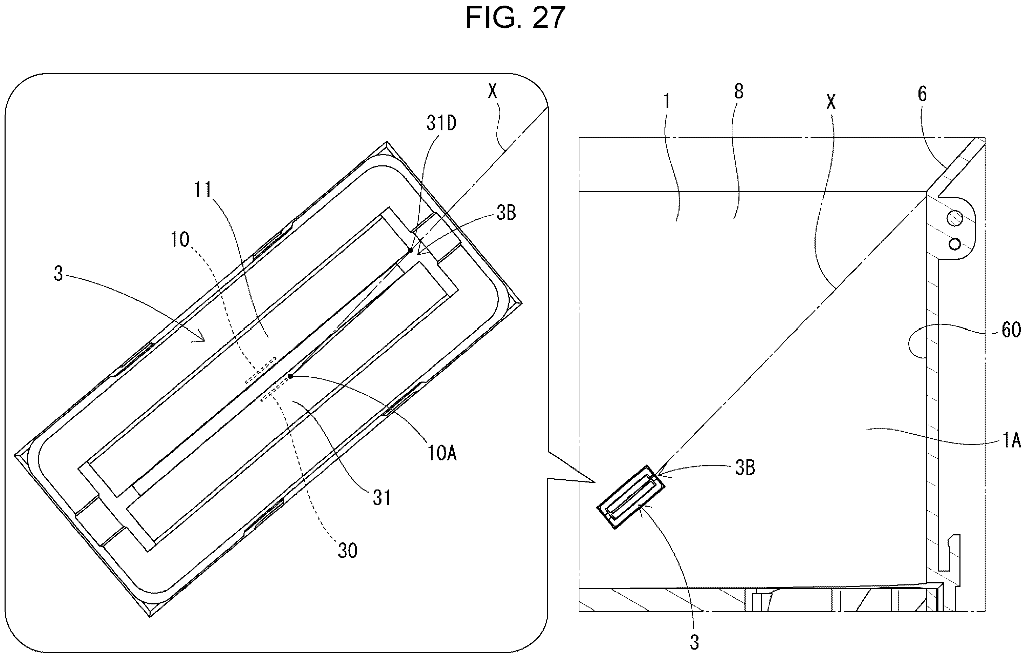

Fig. 27 illustrates a portion of an ozone generator according to a sixth embodiment by way of example. The sixth embodiment differs from the fifth embodiment mainly in that an angle at which the ozone generating body 3 is mounted on the flow path 1 is changed. Other components are the same as those according to the fifth embodiment, and a detailed description is omitted.

As illustrated in Fig. 27, an edge portion of the first electrode 10 on the gas outlet 3B side is referred to as the first edge portion 10A, and an edge portion of the second dielectric 31 on the gas outlet 3B side is referred to as the second edge portion 31D. The straight line X passing through the first edge portion 10A and the second edge portion 31D and extending toward the gas outlet 3B intersects with the flow path component 60. In an example illustrated in Fig. 25, the straight line X passes through a predetermined position of the first edge portion 10A, but it is preferable that the straight line X intersects with the flow path component 60 even when passing through another position (another position in the longitudinal direction) of the first edge portion 10A. Similarly, it is preferable that the straight line X intersects with the flow path component 60 even when passing through another position (another position in the longitudinal direction) of the second edge portion 31D. With the structure described above, the first electrode 10 of the first electrode 10 is less likely to be visually recognized through the gas outlet 3B from the exhaust port 6 side of the flow path 1. Therefore, ultraviolet rays that are generated between electrodes can be inhibited from being directly seen.

7. Seventh Embodiment

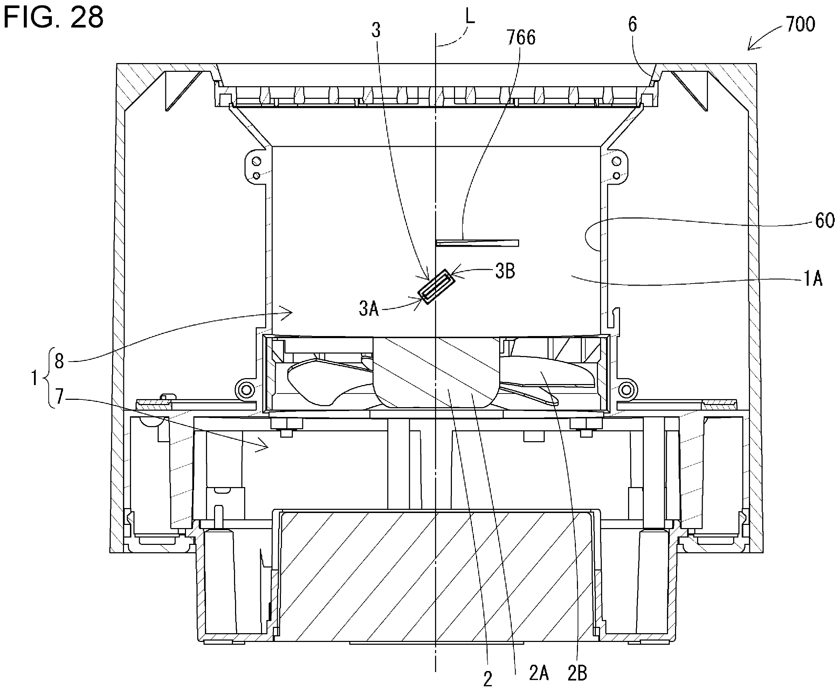

Fig. 28 illustrates a portion of an ozone generator according to a seventh embodiment by way of example. The seventh embodiment differs from the fifth embodiment mainly in that the ozone generator includes a diffuser panel. Other components are the same as those according to the fifth embodiment, and a detailed description is omitted.

As illustrated in Fig. 28, an ozone generator 700 according to the seventh embodiment includes a diffuser panel 766. The diffuser panel 766 corresponds to an example of a "shielding portion" according to the present disclosure. The diffuser panel 766 is for diffusing the ozone that is generated by the ozone generating body 3 in the flow path 1. The material of the diffuser panel 766 preferably has resistance to ozone and is, for example, ABS resin. The diffuser panel 766 is disposed downstream of the ozone generating body 3 in the flow path 1. The diffuser panel 766 projects inward from the wall surface 1A of the flow path 1. The diffuser panel 766 projects from a portion of the wall surface 1A in the circumferential direction. The width of the diffuser panel 766 decreases as being farther away from the wall surface 1A. The diffuser panel 766 has a sectorial shape. The diffuser panel 766 is formed integrally with the flow path component 60 (specifically, the first divided body 60A (see Fig. 25)). The diffuser panel 766 is disposed so as to overlap the ozone generating body 3 (specifically, a portion of the ozone generating body 3 on the gas outlet 3B side) when viewed in the axial direction of the central axis L (for example, from the other end side in the Z-direction). More specifically, the diffuser panel 766 overlaps the gas outlet 3B when viewed in the axial direction of the central axis L. This enables the ozone generating body 3 to be likely to be visually recognized through the gas outlet 3B from the exhaust port 6 side of the flow path 1.

As illustrated in Fig. 28, the diffuser panel 766 projects inward from a portion of the wall surface 1A of the flow path 1 in the circumferential direction toward the center, and the width thereof in the circumferential direction decreases as being farther away from the wall surface 1A. The angle of an end of the diffuser panel 766 when viewed in the Z-direction is, for example, no less than 15° and no more than 45°, and is 30° in an example illustrated in Fig. 28. The diffuser panel 766 projects from the wall surface 1A toward the center, and the thickness thereof gradually decreases toward the distal end thereof. For example, the thickness of the diffuser panel 766 is set in a range of 2 mm or more and 3 mm or less at a position on the wall surface 1A side and is set about 1 mm at a position on the distal end side (the side near the center).

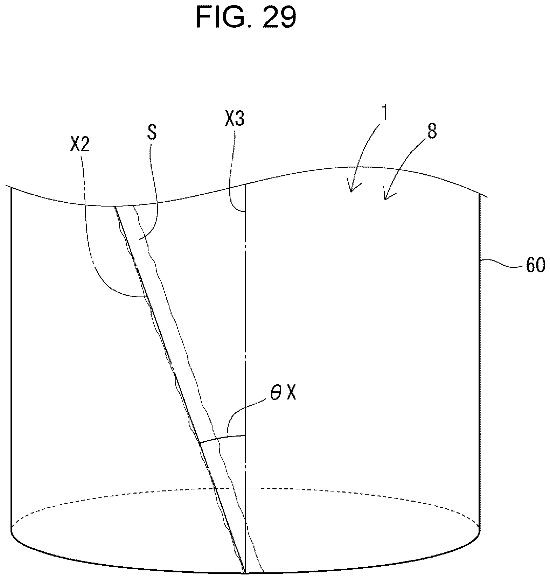

The opening direction of the gas inlet 3A may be determined in the following manner. The inclination angle with respect to the central axis L of the swirl flow generated due to the rotation of the fan 2 is referred to as a swirl flow angle. The swirl flow angle can be measured by using, for example, a method illustrated in Fig. 29. Fig. 29 schematically illustrates a cylinder that imitates the flow path 1 (specifically, the second flow path 8). The swirl flow is generated by performing the air sending operation of the fan 2, a smoke canister is used on a lower end side of the cylinder, and the direction of the swirl flow is identified from, for example, the trace S of smoke that remains on a wall surface (a surface that corresponds to the wall surface 1A) as illustrated in Fig. 29. As for the trace S of smoke, a straight line X2 that extends along an edge, for example, is identified. The angle $\theta X$ of the straight line X2 with respect to a straight line X3 which extends in the up-down direction is measured, and is referred to as the swirl flow angle. For example, the angle $\theta X$ is measured with the cylinder developed on a plane. For example, the swirl flow angle $\theta X$ is preferably 20°.

An angle acquired by adding an angle of no less than - 30° and no more than 30° into the swirl flow angle is referred to as an addition angle. The addition angle is preferably no less than -10° and no more than 10°. The direction in which gas enters from the gas inlet 3A (the opening direction) is inclined at the addition angle in the rotation direction of the fan 2 with respect to the central axis L. The opening direction of the gas inlet 3A is thus configured to be inclined at an angle close to the swirl flow angle, whereby the swirl flow easily enters the gas inlet 3A. Accordingly, while the diffuser panel 766 makes the ozone generating body 3 less likely to be visually recognized, gas is easily introduced into the discharge space DS from the gas inlet 3A, so that the efficiency of generation of ozone can be improved.

<Other embodiments>

The present invention is not limited to the embodiments described above with reference to the drawings. For example, embodiments described later are included in the technical range of the present invention. Various features according to the embodiments described above and the embodiments described later may be combined in any way, provided that there is no contradiction.

According to first to seventh embodiments described above, the Z-direction coincides with the up-down direction but is not limited to the up-down direction. For example, the Z-direction may be inclined with respect to the up-down direction.

According to the first to fourth embodiments described above, the first dielectric and the second dielectric are supported by the support portion at each one end thereof, but may be supported at both ends thereof.

According to the first to fourth embodiments described above, the first dielectric and second dielectric are supported by the support portion at each one end thereof on the same side, but may not be supported at each one end thereof on the same side, and may be supported, for example, at each one end on an alternate opposite side.

According to the fifth to seventh embodiments described above, the opening direction of the gas inlet 3A is the same as the discharge direction of the gas outlet 3B, but may be a different direction.

According to the fifth to seventh embodiments described above, the gas inlet 3A has a single opening region, but may have multiple divided opening regions.

It is to be thought that the embodiments disclosed herein are examples and are not restrictive in all aspects. The scope of the present invention is not limited by the embodiments disclosed herein, but all modifications are included therein within the scope of claims or within an equivalent to the claims.

(Appendix)

The present invention can have aspects described below.

(Appendix 1)

[1] An ozone generating body according to the present invention includes a first electrode, a first dielectric that covers the first electrode, a second electrode, and a second dielectric that covers the second electrode. The ozone generating body further includes a support portion that supports the first dielectric and the second dielectric. A discharge space is formed between the first dielectric and the second dielectric. Young's modulus of the support portion is less than those of the first dielectric and the second dielectric.

With this structure, a stress is less likely to be applied to a portion supported by the support portion even when the first dielectric or the second dielectric vibrates. Therefore, the first dielectric and the second dielectric are less likely to be damaged.

[2] The support portion may support the first dielectric and the second dielectric at one end side in a perpendicular direction that is perpendicular to a direction in which the first dielectric and the second dielectric are arranged.

With this structure, since the first dielectric and the second dielectric are supported at the ends on the same side, a portion between the first dielectric and the second dielectric at the other end side in the perpendicular direction can be opened. Accordingly, gas easily enters the discharge space formed between the first dielectric and the second dielectric. Consequently, the efficiency of generation of ozone can be improved.

[3] The support portion may include a spacer that is disposed between the first dielectric and the second dielectric.

With this structure, a distance between the first dielectric and the second dielectric can be easily set by the spacer.

[4] The ozone generating body may include a first terminal that is electrically connected to the first electrode, and a second terminal that is electrically connected to the second electrode. The first terminal may include a first connection portion that is electrically connected to the first electrode and a first projecting portion that is continuous with the first connection portion and that projects further toward the one end side than an end portion of the first dielectric. The second terminal may include a second connection portion that is electrically connected to the second electrode and a second projecting portion that is continuous with the second connection portion and that projects in the same direction as the first projecting portion. The spacer may be an insulating member and may include a spacer portion that is disposed between the first dielectric and the second dielectric and an extension portion that extends from the spacer portion and that is disposed between the first projecting portion and the second projecting portion.

With this structure, the first terminal and the second terminal can be insulated from each other more reliably.

[5] The ozone generating body may include a first terminal that is electrically connected to the first electrode,

and a second terminal that is electrically connected to the second electrode. The first terminal may include a first connection portion that is electrically connected to the first electrode, a first projecting portion that is continuous with the first connection portion and that projects further toward the one end side than an end portion of the first dielectric, and a third connection portion that is bent and extends from an end of the first projecting portion. The second terminal may include a second connection portion that is electrically connected to the second electrode, a second projecting portion that is continuous with the second connection portion and that projects in the same direction as the first projecting portion, and a fourth connection portion that is bent and extends from an end of the second projecting portion.

With this structure, the third connection portion of the first terminal is bent and extends from the end of the first projecting portion, and accordingly, the first terminal can be inhibited from expanding in a projecting direction of the first projecting portion. The fourth connection portion of the second terminal is bent and extends from the end of the second projecting portion, and accordingly, the second terminal can be inhibited from expanding in a projecting direction of the second projecting portion.

[6] The support portion may include a holder that holds the first dielectric and the second dielectric with the spacer interposed therebetween.

With this structure, the distance between the first dielectric and the second dielectric can be kept constant by the spacer and the holder of the support portion.

[7] The holder may have an annular shape that surrounds outer circumferences of the first dielectric and the second dielectric with the spacer interposed therebetween.

With this structure, the first dielectric and the second dielectric with the spacer interposed therebetween can be easily assembled by being inserted into the hole of the holder.

[8] The ozone generating body may include a first terminal that is electrically connected to the first electrode, and a second terminal that is electrically connected to the second electrode. The first terminal may be disposed on a side of the first dielectric opposite to the spacer side. The second terminal may be disposed on a side of the second dielectric opposite to the spacer side. The holder may include a notch portion that is cut such that the first terminal and the second terminal are exposed.

With this structure, the first terminal and the second terminal are easily filled with resin via the notch portion.

[9] The holder may include a second notch portion that is cut such that the discharge space is exposed.

With this structure, the holder surrounds outer circumferences of the first dielectric and the second dielectric, but gas can be allowed to enter the discharge space via the second notch portion. Therefore, reduction in the amount of the gas entering the discharge space due to the provision of the holder can be reduced.

[10] The first dielectric and the second dielectric may be made of ceramics. The support portion may be made of resin.

With this structure, while the first dielectric and the second dielectric are made of ceramics, the first dielectric and the second dielectric can be inhibited from being damaged in a case where a stress is applied to the portion supported by the support portion when a vibration is transmitted thereto.

[11] The natural frequencies of the first dielectric and the second dielectric may be 200 Hz or more.

With this structure, a vibration due to resonance can be reduced in a situation where a vibration is transmitted from the outside, for example, during transportation. As a result, a stress applied to the first dielectric and the second dielectric during vibrating is reduced, and accordingly, damage thereto is less likely to occur.

[12] The support portion may include double-sided tapes for adhering the first dielectric and the second dielectric to the spacer.

With this structure, it is easy to adhere the first dielectric and the second dielectric to the spacer.

[13] A ozone generator according to the present invention includes a flow path for gas, a fan, and the ozone generating body described in any one of [1] to [12]. The fan sends gas from an intake port side to an exhaust port side of the flow path. The ozone generating body generates ozone in the flow path by using air that is sucked from the intake port as a material.

With this structure, the ozone generating body described in any one of [1] to [12] can be used for the ozone generator.

[14] The support portion of the ozone generating body may support the first dielectric and the second dielectric at one end side in a perpendicular direction that is perpendicular to a direction in which the first dielectric and the second dielectric are arranged, and may be held outside a wall surface of the flow path. The first dielectric and the second dielectric of the ozone generating body may project inward from the wall surface.

With this structure, as compared with a structure in which ends on both sides are supported or a structure in which ends on alternate opposite sides are each supported, a structure for fixing the ozone generating body and a wiring can be concentrated, and accordingly, the structure can be made simple.

(Appendix 2)

[1] An ozone generating unit according to the present invention includes a first electrode, a first dielectric that covers the first electrode, a second electrode, a second dielectric that covers the second electrode, a discharge space being provided between the first dielectric and the second dielectric, a first conductor portion that is electrically connected to the first electrode and that extends from one end side of the first dielectric in a perpendicular direction that is perpendicular to a direction in which the first dielectric and the second dielectric are arranged, and a second conductor portion that is electrically connected to the second electrode and that extends from one end side of the second dielectric in the perpendicular direction. Thermosetting resin is provided between the first conductor portion and the second conductor portion, and the first conductor portion and the second conductor portion are insulated from each other.

With this structure, since the first conductor portion and the second conductor portion extend from the one end side of the first dielectric and the second dielectric, a distance between the first conductor portion and the second conductor portion is short. However, the thermosetting resin is provided between the first conductor portion and the second conductor portion, so that the first conductor portion and the second conductor portion are insulated from each other. Accordingly, insulation between the first conductor portion and the second conductor portion can be ensured by the thermosetting resin.

[2] An insulating member that is disposed between the first dielectric and the second dielectric and that differs from the thermosetting resin that is provided between the first conductor portion and the second conductor portion may be included.

With this structure, the distance between the first dielectric and the second dielectric can be easily set by the insulating member, and insulation between the first dielectric and the second dielectric can be ensured.

[3] The first conductor portion may include a first terminal that is electrically connected to the first electrode. The second conductor portion may include a second terminal that is electrically connected to the second electrode. The first terminal may include a first connection portion that is electrically connected to the first electrode and a first projecting portion that is continuous with the first connection portion and that projects further toward the one end side than an end portion of the first dielectric. The second terminal may include a second connection portion that is electrically connected to the second electrode and a second projecting portion that is continuous with the second connection portion and that projects in the same direction as the first projecting portion. The insulating member may include a spacer portion that is disposed between the first dielectric and the second dielectric and an extension portion that extends from the spacer portion and that is disposed between the first projecting portion and the second projecting portion.

With this structure, insulation between the first projecting portion and the second projecting portion can be ensured by the extension portion, and accordingly the first terminal and the second terminal can be insulated from each other more reliably.

[4] A holder that holds the first dielectric and the second dielectric with the insulating member interposed therebetween, and a holding portion that contains and holds at least a position of the holder may be included.

With this structure, the distance between the first dielectric and the second dielectric can be kept constant by the insulating member and the holder, and also the first dielectric and the second dielectric can be held by the holding portion.

[5] The first conductor portion may include the first terminal that includes the first connection portion that is electrically connected to the first electrode. The second conductor portion may include the second terminal that includes the second connection portion that is electrically connected to the second electrode. The first terminal may be disposed on a side of the first dielectric opposite to the insulating member side. The second terminal may be disposed on a side of the second dielectric opposite to the insulating member side. The holder may include a notch portion that is cut such that the first terminal and the second terminal are exposed. The first terminal and the second terminal may be covered by a thermosetting resin that is provided inside the notch portion.

With this structure, the distance between the first dielectric and the second dielectric can be kept constant by the insulating member and the holder, and insulation between the first terminal and the second terminal can be ensured.

[6] The holder may include a second notch portion that is cut such that the discharge space is exposed.

With this structure, the holder surrounds the outer circumferences of the first dielectric and the second dielectric, but gas can be allowed to enter the discharge space via the second notch portion. Therefore, reduction in the amount of the gas entering the discharge space due to the provision of the holder can be reduced.

[7] The first conductor portion may include the first terminal that is electrically connected to the first electrode and a first wiring line that is electrically connected to the first terminal. The second conductor portion may include the second terminal that is electrically connected to the second electrode and a second wiring line that is electrically connected to the second terminal. The first conductor portion may include the first wiring line that is electrically connected to the first terminal. The second conductor portion may include the second wiring line that is electrically connected to the second terminal. The first wiring line and the second wiring line may be surrounded by a thermosetting resin.

With this structure, the first wiring line and the second wiring line can be fixed by the thermosetting resin, and looseness of the first wiring line and the second wiring line can be reduced.

[8] An ozone generator according to the present invention includes the ozone generating unit described above in any one of [1] to [7], a flow path for gas, and a fan that sends gas from an intake port side to an exhaust port side of the flow path. The ozone generating unit generates ozone in the flow path by using air that is sucked from the intake port as a material.

With this structure, the ozone generating unit described above in any one of [1] to [7] described above can be used for the ozone generator.


(Appendix 3)


[1] An ozone generating body according to the present invention includes a first electrode, a first dielectric that covers the first electrode, a second electrode, and a second dielectric that covers the second electrode. The ozone generating body according to the present invention generates dielectric-barrier discharge in a discharge space that is formed between the first dielectric and the second dielectric.


With this structure, the dielectric-barrier discharge is generated in the discharge space, and consequently, ozone can be generated from oxygen. In addition, since the first electrode is covered by the first dielectric and the second electrode is covered by the second dielectric, wear of the first electrode and the second electrode due to oxidation can be inhibited.

[2] The ozone generating body according to the present invention may include a support portion that supports the first dielectric and the second dielectric at one end side in a perpendicular direction that is perpendicular to a direction in which the first dielectric and the second dielectric are arranged.

With this structure, the first dielectric and the second dielectric are supported at the ends on the same side, and accordingly, a portion between the first dielectric and the second dielectric at the other end side in the perpendicular direction can be opened. Therefore, gas easily enters the discharge space formed between the first dielectric and the second dielectric. Consequently, the efficiency of generation of ozone can be improved.

[3] A dielectric gap that corresponds to a distance between the first dielectric and the second dielectric may be 0.15 mm or more.

With this structure, gas easily enters the discharge space and gas is easily discharged from the discharge space.

[4] The dielectric gap that corresponds to the distance between the first dielectric and the second dielectric may be 0.20 mm or more.

With this structure, gas more easily enters the discharge space, and gas is more easily discharged from the discharge space.

[5] The dielectric gap that corresponds to the distance between the first dielectric and the second dielectric may be 0.25 mm or more.

With this structure, gas more easily enters the discharge space, and gas is more easily discharged from the discharge space.

[6] An interelectrode distance that corresponds to a distance between the first electrode and the second electrode may be 1.1 mm or less.

With this structure, the dielectric-barrier discharge can be generated in the discharge space DS and ozone can be generated from oxygen while generation of an electromagnetic noise caused by discharge is inhibited.

[7] The interelectrode distance that corresponds to the distance between the first electrode and the second electrode may be 0.90 mm or less.

With this structure, the dielectric-barrier discharge can be generated in the discharge space DS and ozone can be generated from oxygen while generation of an electromagnetic noise caused by discharge is further inhibited.

[8] The interelectrode distance that corresponds to the distance between the first electrode and the second electrode may be 0.80 mm or less.

With this structure, the dielectric-barrier discharge can be generated in the discharge space DS and ozone can be generated from oxygen while generation of an electromagnetic noise caused by discharge is further inhibited.

[9] An ozone generator according to the present invention includes a flow path for gas, a fan that sends gas from an intake port side to an exhaust port side of the flow path, and the ozone generating body described in any one of [1] to [8]. The ozone generating body generates ozone on the flow path by using air that is sucked from the intake port as a material.

With this structure, the ozone generating body can be used for the ozone generator.

[10] The fan may be disposed upstream of the ozone generating body, may rotate in a predetermined rotation direction, and may thereby generate swirl flow in the rotation direction in the flow path. The first dielectric in the ozone generating body may have a first surface that faces the second dielectric and that forms the discharge space between the first surface and the second dielectric. The second dielectric in the ozone generating body may have a second surface that faces the first surface. The ozone generating body may be disposed on a wall surface side of the flow path. The first surface and the second surface may be arranged so as to be inclined in the rotation direction while extending in a downstream direction.

With this structure, the gas sent from the fan easily enters the discharge space formed between the first surface and the second surface, and accordingly, the efficiency of generation of ozone of the ozone generating body can be improved. In addition, since the first surface and the second surface are inclined while extending in the downstream direction, ultraviolet rays that are generated due to the dielectric-barrier discharge can be inhibited from hitting the eyes of a person who looks the inside of the flow path from the exhaust port side.

(Appendix 4)

[1] An ozone generating body according to the present invention includes a first electrode, a first dielectric that covers the first electrode, a second electrode, and a second dielectric that covers the second electrode. A discharge space is formed between the first dielectric and the second dielectric. The ozone generating body according to the present invention further includes a support portion that supports the first dielectric and the second dielectric at one end side in a perpendicular direction that is perpendicular to a direction in which the first dielectric and the second dielectric are arranged. The first dielectric includes a first surface that faces the second dielectric and that forms the discharge space between the first surface and the second dielectric. The second dielectric has a second surface that faces the first surface. An inclination angle $\theta$ of the first surface with respect to the second surface in a case where a direction in which the first surface is separated from the second surface at an other end side in the perpendicular direction is a positive direction satisfies an expression (I):

$$-1.8 \ [\%] \leq \tan \theta \times 100 \leq 3.0 \ [\%]. \ \cdots \text{Expression (I)}$$

With this structure, since the first dielectric and the second dielectric are supported at the ends on the same side, a portion between the first dielectric and the second dielectric at the other end side in the perpendicular direction can be opened. Accordingly, gas easily enters the discharge space formed between the first dielectric and the second dielectric. Consequently, the efficiency of generation of ozone can be improved. In addition, since the inclination angle $\theta$ is set in the range satisfying the expression (I), it is possible to inhibit gas from being less likely to enter the discharge space and ozone generated in the discharge space from being less likely to be discharged due to a small opening at the other end side of the ozone generating body in the perpendicular direction, and in addition, it is possible to inhibit generation of an electromagnetic noise caused by discharge due to a large opening at the other end side of the ozone generating body in the perpendicular direction.

[2] The inclination angle $\theta$ may satisfy an expression (II) :

$$-1.0 \ [\%] \leq \tan \theta \times 100. \ \cdots \text{Expression (II)}$$

With this structure, it is possible to more reliably inhibit gas from being less likely to enter the discharge space and ozone generated in the discharge space from being less likely to be discharged due to a small opening at the other end side of the ozone generating body in the perpendicular direction.

[3] The inclination angle $\theta$ may satisfy an expression (III) :

$$-0.5 \ [\%] \leq \tan \theta \times 100. \ \cdots \text{Expression (III)}$$

With this structure, it is possible to more reliably inhibit gas from being less likely to enter the discharge space and ozone generated in the discharge space from being less likely to be discharged due to a small opening at the other end side of the ozone generating body in the perpendicular direction.

[4] The inclination angle θ may satisfy an expression (IV) :

$$\tan \ \theta \ \times \ 100 \ \le \ 1.0 \ [\%]. \ \cdots \ \text{Expression (IV)}$$

With this structure, it is possible to more reliably inhibit generation of an electromagnetic noise caused by discharge due to a large opening at the other end side of the ozone generating body in the perpendicular direction.

[5] The inclination angle θ may satisfy an expression (V) :

$$\tan \ \theta \ \times \ 100 \ \le \ 0.5 \ [\%]. \ \cdots \ \text{Expression (V)}$$

With this structure, it is possible to more reliably inhibit generation of an electromagnetic noise caused by discharge due to a large opening at the other end side of the ozone generating body in the perpendicular direction.

[6] An ozone generator according to the present invention includes a flow path for gas, a fan that sends gas from an intake port side to an exhaust port side of the flow path, and the ozone generating body described in any one of [1] to [5]. The ozone generating body generates ozone in the flow path by using air that is sucked from the intake port as a material.

With this structure, the ozone generating body can be used for the ozone generator.

[7] The fan may be disposed upstream of the ozone generating body, may rotate in a predetermined rotation direction, and may thereby generate swirl flow in the rotation direction in the flow path. The first dielectric in the ozone generating body may have a first surface that faces the second dielectric and that forms the discharge space between the first surface and the second dielectric. The second dielectric in the ozone generating body may have a second surface that faces the first surface. The ozone generating body may be disposed on a wall surface side of the flow path. The first surface and the second surface may be arranged so as to be inclined in the rotation direction while extending in a downstream direction.

With this structure, the gas sent from the fan easily enter the discharge space formed between the first surface and the second surface, and accordingly, the efficiency of generation of ozone of the ozone generating body can be improved. In addition, since the first surface and the second surface are inclined while extending in the downstream direction, ultraviolet rays that are generated due to the dielectric-barrier discharge can be inhibited from hitting the eyes of a person who looks the inside of the flow path from the exhaust port side.

(Appendix 5)

[1] An ozone generator according to the present invention includes a flow path for gas, a fan, an ozone generating body, and a diffuser panel. The fan sends gas from an intake port side to an exhaust port side of the flow path. The ozone generating body is provided in the flow path and generates ozone in the flow path. The diffuser panel is disposed downstream of the ozone generating body in the flow path.

With this structure, since the ozone generated by the ozone generating body is diffused by the diffuser panel disposed downstream thereof, ozone concentration near the exhaust port of the flow path can be dispersed.

[2] The ozone generating body may include a first electrode, a first dielectric that covers the first electrode, a second electrode, and a second dielectric that covers the second electrode. A discharge space may be formed between the first dielectric and the second dielectric. The diffuser panel may be disposed at a position covering an opening that is formed between the first dielectric and the second dielectric when viewed from the exhaust port side.

With this structure, since the opening is covered by the diffuser panel, ultraviolet rays due to dielectric-barrier discharge generated in the discharge space can be inhibited from hitting the eyes of a person who looks from the exhaust port side.

[3] The flow path may include a linear flow path that linearly extends from the exhaust port toward an upstream side. The ozone generating body may be provided in the linear flow path. The ozone generating body may include a first electrode, a first dielectric that covers the first electrode, a second electrode, and a second dielectric that covers the second electrode. The first dielectric may face the second dielectric and may have a first surface that forms the discharge space between the first surface and the second dielectric. The second dielectric may have a second surface that faces the first surface. The first surface and the second surface may be arranged so as to be inclined with respect to an extending direction of the linear flow path.

With this structure, since the first surface and the second surface that face each other are arranged so as to be inclined with respect to the extending direction of the linear flow path, ultraviolet rays of the dielectric-barrier discharge generated in the discharge space can be inhibited from hitting the eyes of a person who looks from the exhaust port side.

[4] The ozone generator may include a fan that generates swirl flow in the flow path. The diffuser panel may project inward from a portion of a wall surface of the flow path in the circumferential direction, and the width thereof in the circumferential direction may decrease as being farther away from the wall surface.

The speed of gas in the swirl flow is faster as being farther away from the rotation axis of the swirl flow, and is slower as being closer to the rotation axis. With the structure described above, the gas can be diffused in a wide range at positions far from the rotation axis where the movement speed of the gas is fast, and the gas can be diffused in a narrow range at positions near the rotation axis where the movement speed of the gas is slow. Accordingly, pressure loss due to the diffuser panel is reduced, and ozone in the gas can be diffused in a well-balanced manner.

[5] The ozone generator may include a fan that rotates in a predetermined rotation direction and that thereby generates the swirl flow in the rotation direction in the flow path. The ozone generating body may be disposed on a wall surface side of the flow path. The first surface and the second surface may be inclined in the rotation direction while extending toward the exhaust port. The diffuser panel may be disposed on a first imaginary line that imaginarily extends from the first surface and may be disposed on a second imaginary line that imaginarily extends from the second surface when viewed in the X-direction perpendicular to the extending direction of the linear flow path.

With this structure, the gas sent from the fan can be made to smoothly flow into the discharge space, ozone can be generated in the discharge space, and the gas containing ozone that is discharged from the discharge space can be diffused by the diffuser panel more reliably.

[6] The diffuser panel may project from the portion of the wall surface of the flow path in the circumferential direction and may be disposed such that the center of the diffuser panel in the Y-direction perpendicular to the extending direction of the linear flow path and to the X-direction is away from the center of the ozone generating body to the rotation direction when viewed in the X-direction.

With this structure, the ozone that is generated by the ozone generating body can be diffused to both sides of the diffuser panel in a well-balanced manner.

[7] The diffuser panel may be disposed such that, when viewed in the X-direction, a rear end of the diffuser panel in the rotation direction matches the center of the ozone generating body with respect to the Y-direction.

With this structure, while reducing the pressure loss due to the diffuser panel, the ozone generated by the ozone generating body can be diffused to both sides of the diffuser panel in a well-balanced manner.

[8] The ozone generator may include a finger guard that is provided downstream of the diffuser panel and that has multiple holes.

With this structure, while allowing gas to be discharged, foreign substances from the outside can be prevented from entering the upstream side of the finger guard.

[9] The flow path may have, in a downstream of the diffuser panel, a tapered surface that is inclined such that a sectional area of the flow path increases toward a downstream side.

With this structure, the ozone diffused by the diffuser panel can be further diffused by the tapered surface.

[10] The diffuser panel may project inward from the portion of the wall surface of the flow path in the circumferential direction, and the thickness thereof decreases as being away from the wall surface.

With this structure, diffusion of the ozone generated by the ozone generating body and the reduction in the pressure loss due to the diffuser panel can be achieved in a well-balanced manner.

[11] The ozone generating body may be disposed to be closer to the wall surface side rather than the center of the flow path.

With this structure, since the ozone generating body can be disposed to be closer to the wall surface side, the degree of freedom of design is increased. In addition, even when the ozone generating body is disposed to be closer to the wall surface side, ozone concentration distribution can be easily dispersed with the structure described above.

(Appendix 6)

[1] An ozone generator according to the present invention includes a flow path component in which a flow path for gas is provided, an axial fan that generates swirl flow about a central axis on the flow path and that sends gas from an intake port side to an exhaust port side of the flow path, and an ozone generating body that includes a first electrode, a first dielectric that covers the first electrode, a second electrode, and a second dielectric that covers the second electrode. Ozone generator includes an ozone generating body. In the ozone generating body, one end of the first dielectric and one end of the second dielectric are supported by the flow path component. An other end of the first dielectric and an other end of the second dielectric are separated from an inner wall surface of the flow path component. A discharge space is provided between the first dielectric and the second dielectric. A gas inlet is constituted by including an end portion of the first dielectric that differs from the one end and the other end and an end portion of the second dielectric that faces the end portion of the first dielectric. A direction in which gas enters from the gas inlet is inclined in a rotation direction of the axial fan with respect to the central axis.

With this structure, the direction in which gas enters from the gas inlet is inclined in the rotation direction of the axial fan with respect to the central axis, and accordingly, gas is easily to be introduced into the discharge space from the gas inlet. Therefore, the efficiency of generation of ozone of the ozone generator is improved.

[2] The axial fan may include a rotor and a blade portion that projects from the rotor in a radial direction. The first dielectric and the second dielectric may be located outside the rotor in the radial direction.

With this structure, the gas inlet in its entirety can be inclined in the rotation direction of the axial fan with respect to the central axis, so that the swirl flow can be made to easily enter the gas inlet.

[3] The ozone generating body may include a gas outlet that is provided on an opposite side to the gas inlet and that discharges gas that is introduced from the gas inlet. The flow path component may be located at a position in a direction in which the gas exits from the gas outlet.

With this structure, the discharge space is less likely to be visually recognized through the gas outlet from the exhaust port side of the flow path, and ultraviolet rays can be inhibited from being directly seen.

[4] The first dielectric may be arranged on the axial fan side with respect to the second dielectric. When an edge portion of the first electrode on the gas outlet side defined as a first edge portion and an edge portion of the second dielectric on the gas outlet side is defined as a second edge portion, a straight line that passes through the first edge portion and the second edge portion and that extends toward the gas outlet may intersect with the flow path component.

With this structure, the vicinity of the first electrode is less likely to be visually recognized through the gas outlet from the exhaust port side of the flow path, and ultraviolet rays that are generated near the first electrode can be inhibited from being directly seen.

[5] A shielding portion that is provided on the exhaust port side with respect to the ozone generating body may be included. At least a part of the shielding portion may overlap the ozone generating body when viewed in the axial direction of the central axis.

With this structure, the ozone generating body can be less likely to be visually recognized through the gas outlet from the exhaust port side of the flow path.

[6] An inclination angle with respect to the central axis of the swirl flow generated due to rotation of the axial fan may be defined as a swirl flow angle, an angle acquired by adding an angle of no less than -30° and no more than 30° into the swirl flow angle may be defined as an addition angle, and a direction in which gas enters from the gas inlet may be inclined at the addition angle in the rotation direction of the axial fan with respect to the central axis.

With this structure, while the shielding portion makes the ozone generating body less likely to be visually recognized, gas is easily introduced into the discharge space from the gas inlet, so that the efficiency of generation of ozone can be improved.

[7] The ozone generating body may include a gas outlet that is provided on an opposite side to the gas inlet and that discharges gas that is introduced from the gas inlet. The shielding portion may overlap the gas outlet when viewed in the axial direction of the central axis.

With this structure, the gas outlet is less likely to be visually recognized from the exhaust port side of the flow path, and ultraviolet rays can be inhibited from being directly seen.

Reference Signs List

1       flow path

1A      wall surface

2       fan (axial fan)

2A      rotor

2B      blade portion

3       ozone generating body

3B      first conductor portion

| 3C | second conductor portion |
| 3U | ozone generating unit |
| 3X | gas inlet |
| 3Y | gas outlet |
| 5 | intake port |
| 6 | exhaust port |
| 8 | second flow path (linear flow path) |
| 8B | tapered surface |
| 10 | first electrode |
| 10A | first edge portion |
| 11 | first dielectric |
| 11A | end portion |
| 11B | the other end |
| 11C | end portion |
| 11X | first surface |
| 12 | first terminal |
| 21 | first connection portion |
| 22 | first projecting portion |
| 23 | third connection portion |
| 30 | second electrode |
| 31 | second dielectric |
| 31A | end portion |
| 31B | the other end |
| 31C | end portion |
| 31D | second edge portion |
| 31X | second surface |
| 32 | second terminal |
| 41 | second connection portion |
| 42 | second projecting portion |

| | |
|---|---|
| 43 | fourth connection portion |
| 50 | support portion |
| 51 | spacer |
| 52 | holder |
| 53 | spacer portion |
| 54 | extension portion |
| 55 | double-sided tape |
| 58 | first notch portion (notch portion) |
| 59 | second notch portion |
| 60 | flow path component |
| 64 | finger guard |
| 66 | diffuser panel |
| 66A | rear end of the diffuser panel |
| 70 | holding portion |
| 71 | first partner terminal (first wiring line) |
| 72 | second partner terminal (second wiring line) |
| 89 | resin member |
| 90 | opening |
| 90A | first opening |
| 90B | second opening |
| 90C | third opening |
| 100 | ozone generator |
| 500 | ozone generator |
| 700 | ozone generator |
| 766 | diffuser panel |
| C1 | center of the diffuser panel |
| C2 | center of the ozone generating body |
| DS | discharge space |
| GC | dielectric gap |

GE     interelectrode distance

L     central axis

VL1     first imaginary line

VL2     second imaginary line

W     rotation direction

$\theta$     inclination angle

**Claims**

1. An ozone generating body comprising:

   a first electrode;
   a first dielectric that covers the first electrode;
   a second electrode;
   a second dielectric that covers the second electrode; and
   a support portion that supports the first dielectric and the second dielectric,
   wherein a discharge space is formed between the first dielectric and the second dielectric, and
   wherein Young's modulus of the support portion is less than those of the first dielectric and the second dielectric.

2. The ozone generating body according to claim 1,
   wherein the support portion supports the first dielectric and the second dielectric at one end side in a perpendicular direction that is perpendicular to a direction in which the first dielectric and the second dielectric are arranged.

3. The ozone generating body according to claim 2,
   wherein the support portion includes a spacer that is disposed between the first dielectric and the second dielectric.

4. The ozone generating body according to claim 3, further comprising:

   a first terminal that is electrically connected to the first electrode; and
   a second terminal that is electrically connected to the second electrode,
   wherein the first terminal includes a first connection portion that is electrically connected to the first electrode and a first projecting portion that is continuous with the first connection portion and that projects further toward the one end side than an end portion of the first dielectric,
   wherein the second terminal includes a second connection portion that is electrically connected to the second electrode and a second projecting portion that is continuous with the second connection portion and that projects in the same direction as the first projecting portion, and
   wherein the spacer is an insulating member and includes a spacer portion that is disposed between the first dielectric and the second dielectric and an extension portion that extends from the spacer portion and that is disposed between the first projecting portion and the second projecting portion.

5. The ozone generating body according to claim 3 or 4, further comprising:

   a first terminal that is electrically connected to the first electrode; and
   a second terminal that is electrically connected to the second electrode,
   wherein the first terminal includes a first connection portion that is electrically connected to the first electrode, a first projecting portion that is continuous with the first connection portion and that projects further toward the one end side than an end portion of the first dielectric, and a third connection portion that is bent and extends from an end of the first projecting portion, and
   wherein the second terminal includes a second connection portion that is electrically connected to the second electrode, a second projecting portion that is continuous with the second connection portion and that projects in the same direction as the first projecting portion, and a fourth connection portion that is bent and extends from an end of the second projecting portion.

6. The ozone generating body according to any one of claims 3 to 5,
wherein the support portion includes a holder that holds the first dielectric and the second dielectric with the spacer interposed therebetween.

7. The ozone generating body according to claim 6, further comprising;

a first terminal that is electrically connected to the first electrode; and
a second terminal that is electrically connected to the second electrode,
wherein the first terminal is disposed on a side of the first dielectric opposite to the spacer side,
wherein the second terminal is disposed on a side of the second dielectric opposite to the spacer side, and
wherein the holder includes a notch portion that is cut such that the first terminal and the second terminal are exposed.

8. The ozone generating body according to claim 7,
wherein the holder includes a second notch portion that is cut such that the discharge space is exposed.

9. The ozone generating body according to any one of claims 1 to 8,
wherein a dielectric gap that corresponds to a distance between the first dielectric and the second dielectric is 0.15 mm or more.

10. An ozone generating unit comprising:

the ozone generating body according to any one of claims 1 to 9; and
a thermosetting resin,
wherein the support portion of the ozone generating body supports the first dielectric and the second dielectric at one end side in a perpendicular direction that is perpendicular to a direction in which the first dielectric and the second dielectric are arranged,
wherein the ozone generating body includes
a first terminal that is electrically connected to the first electrode, and
a second terminal that is electrically connected to the second electrode,
wherein the first terminal includes a first connection portion that is electrically connected to the first electrode and a first projecting portion that is continuous with the first connection portion and that projects further toward the one end side than an end portion of the first dielectric,
wherein the second terminal includes a second connection portion that is electrically connected to the second electrode and a second projecting portion that is continuous with the second connection portion and that projects in the same direction as the first projecting portion, and
wherein the thermosetting resin is provided between the first projecting portion and the second projecting portion.

11. An ozone generator comprising:

a flow path for gas;
a fan that sends gas from an intake port side to an exhaust port side of the flow path; and
the ozone generating body according to any one of claims 1 to 9,
wherein the ozone generating body generates ozone on the flow path by using air that is sucked via the intake port as a material.

12. The ozone generator according to claim 11,

wherein the support portion of the ozone generating body supports the first dielectric and the second dielectric at one end side in a perpendicular direction that is perpendicular to a direction in which the first dielectric and the second dielectric are arranged, and is held outside a wall surface of the flow path, and
wherein the first dielectric and the second dielectric of the ozone generating body project inward from the wall surface.

13. The ozone generator according to claim 11 or 12, further comprising:

a flow path component in which the flow path is provided; and
an axial fan that generates swirl flow about a central axis on the flow path and that sends gas from an intake port side to an exhaust port side,
wherein as for the ozone generating body, one end of the first dielectric and one end of the second dielectric are supported by the flow path component, an other end of the first dielectric and an other end of the second dielectric are separated from an inner wall surface of the flow path component, and a discharge space is provided between the first dielectric and the second dielectric,
wherein a gas inlet is constituted by including an end portion of the first dielectric that differs from the one end and the other end and an end portion of the second dielectric that faces the end portion of the first dielectric, and
wherein a direction in which gas enters from the gas inlet is inclined in a rotation direction of the axial fan with respect to the central axis.

**14.** The ozone generator according to any one of claims 11 to 13,

wherein the support portion supports the first dielectric and the second dielectric at one end side in a perpendicular direction that is perpendicular to a direction in which the first dielectric and the second dielectric are arranged,
wherein the first dielectric has a first surface that faces the second dielectric and that forms the discharge space between the first surface and the second dielectric,
wherein the second dielectric has a second surface that faces the first surface, and
wherein an inclination angle $\theta$ of the first surface with respect to the second surface in a case where a direction in which the first surface is separated from the second surface at an other end side in the perpendicular direction is a positive direction satisfies an expression (I) :

$$-1.8 \ [\%] \leq \tan \theta \times 100 \leq 3.0 \ [\%]. \ \cdots \ \text{Expression (I)}$$

**15.** An ozone generator comprising:

a flow path for gas;
a fan that sends gas from an intake port side to an exhaust port side of the flow path;
the ozone generating body according to any one of Claim 1 to Claim 9 that is provided in the flow path and that generates ozone in the flow path; and
a diffuser panel that is disposed downstream of the ozone generating body in the flow path.

# FIG. 1

# FIG. 2

# FIG. 3

# FIG. 4

# FIG. 5

# FIG. 6

# FIG. 7

# FIG. 8

# FIG. 9

FIG. 10

EP 4 365 130 A1

# FIG. 11

# FIG. 12

## FIG. 13

EP 4 365 130 A1

## FIG. 14

# FIG. 15

FIG. 16

| DIELECTRIC GAP GC | OZONE CONCENTRATION | |
|---|---|---|
| | ppb | EVALUATION |
| 0.10 | 13 | × |
| 0.15 | 31 | ○ |
| 0.20 | 37 | ◎ |
| 0.25 | 40 | ☆ |
| 0.37 | 42 | ☆ |
| 0.50 | 45 | ☆ |
| 0.60 | 46 | ☆ |
| 0.80 | 47 | ☆ |
| 1.00 | 48 | ☆ |

FIG. 17

| INTERELECTRODE DISTANCE GE | NOISE | |
|---|---|---|
| | dB | EVALUATION |
| 0.40 | 15.3 | ☆ |
| 0.45 | 17.5 | ☆ |
| 0.50 | 20.1 | ☆ |
| 0.55 | 23.5 | ☆ |
| 0.67 | 24.9 | ☆ |
| 0.80 | 27.2 | ☆ |
| 0.90 | 28.2 | ◎ |
| 1.10 | 29.5 | ○ |
| 1.30 | 31.1 | × |

FIG. 18

| DIELECTRIC GAP GC | OZONE CONCENTRATION EVALUATION | INTERELECTRODE DISTANCE GE | NOISE EVALUATION | OVERALL EVALUATION |
|---|---|---|---|---|
| 0.10 | × | 0.40 | ☆ | × |
| 0.15 | ○ | 0.45 | ☆ | ○ |
| 0.20 | ◎ | 0.50 | ☆ | ☆ |
| 0.25 | ☆ | 0.55 | ☆ | ☆ |
| 0.37 | ☆ | 0.67 | ☆ | ☆ |
| 0.50 | ☆ | 0.80 | ☆ | ☆ |
| 0.60 | ☆ | 0.90 | ◎ | ☆ |
| 0.80 | ☆ | 1.10 | ○ | G |
| 1.00 | ☆ | 1.30 | × | × |

# FIG. 19

## FIG. 20

| tanθ × 100 [%] | OZONE CONCENTRATION | | NOISE | | OVERALL EVALUATION |
|---|---|---|---|---|---|
| | ppb | EVALUATION | dB | EVALUATION | |
| -1.8 | 35 | ○ | 23.2 | ☆ | ○ |
| -1.0 | 37 | ◎ | 24.3 | ☆ | ◎ |
| -0.5 | 45 | ☆ | 25.0 | ☆ | ☆ |
| 0.0 | 46 | ☆ | 25.2 | ☆ | ☆ |
| 0.5 | 44 | ☆ | 25.9 | ☆ | ☆ |
| 1.0 | 39 | ◎ | 27.2 | ☆ | ◎ |
| 3.0 | 30 | ○ | 28.2 | ◎ | ○ |
| 3.6 | 0 | × | — | — | × |

# FIG. 21

# FIG. 22

# FIG. 23

# FIG. 24

# FIG. 25

FIG. 26

EP 4 365 130 A1

FIG. 27

EP 4 365 130 A1

FIG. 28

# FIG. 29

## INTERNATIONAL SEARCH REPORT

| International application No. |
|---|
| **PCT/JP2022/013827** |

**A. CLASSIFICATION OF SUBJECT MATTER**

*C01B 13/11*(2006.01)i
FI: C01B13/11 A; C01B13/11 Z; C01B13/11 F; C01B13/11 J

According to International Patent Classification (IPC) or to both national classification and IPC

**B. FIELDS SEARCHED**

Minimum documentation searched (classification system followed by classification symbols)

C01B13/11, A61L2/00-33/18, H05H1/24-1/52, B01J19/08-19/12, F01N3/08-3/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-047382 A (NGK SPARK PLUG CO) 26 March 2020 (2020-03-26) entire text, all drawings | 1-15 |
| A | WO 2009/001961 A1 (KYOCERA CORPORATION) 31 December 2008 (2008-12-31) entire text, all drawings | 1-15 |
| A | WO 2008/053940 A1 (KYOCERA CORPORATION) 08 May 2008 (2008-05-08) entire text, all drawings | 1-15 |
| A | JP 55-007564 A (SUMITOMO PRECISION PROD CO) 19 January 1980 (1980-01-19) entire text, all drawings | 1-15 |
| A | JP 2-040475 A (MATSUSHITA REFRIG CO LTD) 09 February 1990 (1990-02-09) entire text, all drawings | 1-15 |
| A | JP 57-088006 A (TOKYO SHIBAURA ELECTRIC CO) 01 June 1982 (1982-06-01) entire text, all drawings | 1-15 |
| A | JP 57-088004 A (TOKYO SHIBAURA ELECTRIC CO) 01 June 1982 (1982-06-01) entire text, all drawings | 1-15 |

☑ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 May 2022** | **07 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2022/013827** |

**C.** **DOCUMENTS CONSIDERED TO BE RELEVANT**

| Category* | Citation of document, with indication, where appropriate, of the relevant passages | Relevant to claim No. |
| --- | --- | --- |
| A | JP 55-144407 A (HITACHI LTD) 11 November 1980 (1980-11-11)<br>entire text, all drawings | 1-15 |
| A | JP 2009-170267 A (NGK INSULATORS LTD) 30 July 2009 (2009-07-30)<br>entire text, all drawings | 1-15 |
| A | WO 2005/005798 A1 (NGK INSULATORS LTD) 20 January 2005 (2005-01-20)<br>entire text, all drawings | 1-15 |
| A | JP 2006-181458 A (NGK INSULATORS LTD) 13 July 2006 (2006-07-13)<br>entire text, all drawings | 1-15 |

Form PCT/ISA/210 (second sheet) (January 2015)

## INTERNATIONAL SEARCH REPORT
### Information on patent family members

International application No.

**PCT/JP2022/013827**

| Patent document cited in search report | | | Publication date (day/month/year) | Patent family member(s) | | | Publication date (day/month/year) |
|---|---|---|---|---|---|---|---|
| JP | 2020-047382 | A | 26 March 2020 | (Family: none) | | | |
| WO | 2009/001961 | A1 | 31 December 2008 | (Family: none) | | | |
| WO | 2008/053940 | A1 | 08 May 2008 | (Family: none) | | | |
| JP | 55-007564 | A | 19 January 1980 | (Family: none) | | | |
| JP | 2-040475 | A | 09 February 1990 | (Family: none) | | | |
| JP | 57-088006 | A | 01 June 1982 | (Family: none) | | | |
| JP | 57-088004 | A | 01 June 1982 | (Family: none) | | | |
| JP | 55-144407 | A | 11 November 1980 | (Family: none) | | | |
| JP | 2009-170267 | A | 30 July 2009 | US entire text, all drawings<br>EP<br>KR | 2009/0179545<br>2081417<br>10-2009-0079180 | A1<br>A2<br>A | |
| WO | 2005/005798 | A1 | 20 January 2005 | US entire text, all drawings<br>EP | 2006/0152133<br>1645730 | A1<br>A1 | |
| JP | 2006-181458 | A | 13 July 2006 | (Family: none) | | | |

## REFERENCES CITED IN THE DESCRIPTION

**Patent documents cited in the description**

- WO 2005005798 A